(19) Europäisches Patentamt
European Patent Office
Office européen des brevets

(11) EP 3 021 395 A1

(12) EUROPEAN PATENT APPLICATION
published in accordance with Art. 153(4) EPC

(43) Date of publication:
**18.05.2016 Bulletin 2016/20**

(21) Application number: **14823755.5**

(22) Date of filing: **09.07.2014**

(51) Int Cl.:
***H01M 8/02*** (2006.01) ***C08G 61/12*** (2006.01)
***C08J 5/22*** (2006.01) ***H01B 1/06*** (2006.01)

(86) International application number:
**PCT/JP2014/068267**

(87) International publication number:
**WO 2015/005370 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.07.2013 JP 2013143693**

(71) Applicant: **JSR Corporation**
**Minato-ku**
**Tokyo 105-8640 (JP)**

(72) Inventors:
- **ONOUE, Kouichi**
**Tokyo 105-8640 (JP)**
- **FUJISHITA, Shouhei**
**Tokyo 105-8640 (JP)**
- **HIGAMI, Makoto**
**Tokyo 105-8640 (JP)**
- **GOTOU, Hirofumi**
**Tokyo 105-8640 (JP)**
- **SAKABE, Takaaki**
**Tokyo 105-8640 (JP)**

(74) Representative: **TBK**
**Bavariaring 4-6**
**80336 München (DE)**

# (54) ELECTROLYTE MEMBRANE, MEMBRANE-ELECTRODE ASSEMBLY, AND SOLID POLYMER FUEL CELL

(57) The present invention relates to an electrolyte membrane, a membrane-electrode assembly and a polymer electrolyte fuel cell. The electrolyte membrane contains a polymer (1) including a hydrophobic structural unit and a structural unit having a proton-conducting group and a polymer (2) including a hydrophobic structural unit having no sulfonic group which is different from the hydrophobic structural unit of the polymer (1).

EP 3 021 395 A1

## Description

TECHNICAL FIELD

The present invention relates to an electrolyte membrane, a membrane-electrode assembly and a polymer electrolyte fuel cell.

BACKGROUND ART

A fuel cell, which is a power generation device from which electricity is directly taken out by electrochemical reaction between hydrogen gas obtained by reforming various hydrocarbon fuels (e.g. natural gas and methane) and atmospheric oxygen gas, is drawing attention as a pollution-free power generation device which can directly convert chemical energy to electric energy with high efficiency.
Such a fuel cell comprises a membrane-electrode assembly constituted by a pair of electrode catalyst layers carrying catalyst (anode and cathode) and a solid polymer electrolyte membrane with proton conductivity held by the electrode catalyst layers. At anode, hydrogen ions and electrons are produced and the hydrogen ions pass through the solid polymer electrolyte membrane and, at cathode, react with oxygen to produce water.
As the solid polymer electrolyte membrane, the patent literature 1 discloses an electrolyte membrane consisting of a block copolymer of hydrophilic segment and hydrophobic segment represented by the following formula, and an aromatic polymer consisting of the hydrophobic segment.
The patent literature 1 specifically describes only the electrolyte membrane.

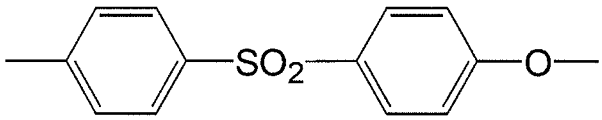

PRIOR ART REFERENCES

PATENT LITERATURES

Patent Literature 1: JP 2007-56147

SUMMARY OF THE INVENTION

PROBLEMS TO BE SOLVED BY THE INVENTION

The membrane-electrode assembly may be produced by preliminarily providing an electrode catalyst layer on a substrate such as polyethylene terephthalate (PET) and then heat-transferring the electrode catalyst layer onto a solid polymer electrolyte membrane.
When producing a membrane-electrode assembly in this manner and when using the electrolyte membrane described in the patent literature 1 as a solid polymer electrolyte membrane, separation between the solid polymer electrolyte membrane and the electrode catalyst layer tended to occur without heat-transfer at high temperature. Furthermore, if the membrane-electrode assembly could be produced, separation between the solid polymer electrolyte membrane and the electrode catalyst layer tended to occur under an operating condition of fuel cell (e.g., in hot water).
In addition, when using the electrolyte membrane described in the patent literature 1 in a fuel cell, flooding tended to occur to decrease the power generation capability of the fuel cell.
In view of the above-described problems, the present invention is to provide an electrolyte membrane which is excellent in power generation capability and water repellency in well balance and by using which a membrane-electrode assembly which unlikely undergoes separation of electrode catalyst layer in hot water can be produced at a relatively low heat transfer temperature.

MEANS FOR SOLVING THE PROBLEMS

The present inventors intensively studied to solve the problems. As a result, they discovered that the problems may be solved by an electrolyte membrane comprising at least two types of specific polymers, thereby completing the present invention.
Embodiments of the present invention can be shown as the following [1] to [11].

[1] An electrolyte membrane containing a polymer (1) comprising a hydrophobic structural unit and a structural unit having a proton-conducting group and a polymer (2) comprising a hydrophobic structural unit having no sulfonic group which is different from the hydrophobic structural unit of the polymer (1).
[2] The electrolyte membrane according to [1], wherein the polymer (2) is an aromatic polyether polymer or a fluorine-containing polymer.
[3] The electrolyte membrane according to [1] or [2], wherein the content of the polymer (1) is 50 to 99.9% by weight when the sum of the contents of the polymer (1) and the polymer (2) is 100% by weight.
[4] The electrolyte membrane according to any one of [1] to [3], wherein the number average molecular weight of the polymer (2) is 1000 to 60000.
[5] The electrolyte membrane according to any one of [1] to [4], wherein the glass transition temperature (Tg) by differential scanning calorimetry (DSC, temperature rising rate: 20°C/min) of the polymer (2) is not higher than 220°C.
[6] The electrolyte membrane according to any one of [1] to [5], wherein the water contact angle is 50 to 120 degree.
[7] The electrolyte membrane according to any one of [1] to [6], wherein the polymer (2) is not compatible with the polymer (1).
[8] The electrolyte membrane according to any one of [1] to [7], wherein the polymer (2) is an aromatic polyether polymer comprising a structural unit represented by the following formula (3).

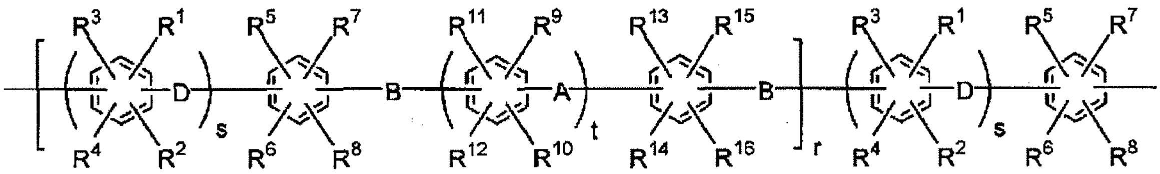

• • • (3)

In the formula (3),
A and D each independently represent a direct bond, -O-,-S-, -CO-, $-SO_2-$, -SO-, -CONH-, -COO-, $-(CF_2)_i-$ (wherein i is an integer of 1 to 10), $-(CH_2)_j-$ (wherein "j" is an integer of 1 to 10), $-CR'_2-$ (wherein R' represents an aliphatic hydrocarbon group, an aromatic hydrocarbon group or a halogenated hydrocarbon group), a cyclohexylidene group or a fluorenylidene group;
B independently represents -O- or -S-;
$R^1$ to $R^{16}$ each independently represent a hydrogen atom, a halogen atom, a hydroxy group, a nitro group, a nitrile group or $R^{22}$-E- (wherein E represents a direct bond, -O-,-S-, -CO-, $-SO_2-$, -CONH-, -COO-, $-CF_2-$, $-CH_2-$, $-C(CF_3)_2-$ or $-C(CH_3)_2-$; $R^{22}$ represents an alkyl group, a halogenated alkyl group, an alkenyl group, an aryl group, a halogenated aryl group or a nitrogen-containing heterocycle and at least one hydrogen atom in these groups may be replaced by at least one kind of group selected from the group consisting of a hydroxy group, a nitro group, a nitrile group and $R^{22}$-E-); two or more of $R^1$ to $R^{16}$ may be bound to form a cyclic structure; and
"s" and "t" each independently represent an integer of 0 to 4; and "r" represents 0 or an integer of 1 or more;
with the proviso that in the formula (3), at least one of A, B and D is -O-, and "s" is an integer of 1 to 4 when "r" is 0.
[9] The electrolyte membrane according to any one of [1] to [8], wherein the hydrophobic structural unit comprised by the polymer (1) is a structure comprising an aromatic ring and having two bonding hands, and is a structural unit wherein:

one aromatic ring is bound to both of the two bonding hands; or
one aromatic ring (a) and an aromatic ring (b) connected to the aromatic ring (a) via a single bond or at least one aromatic ring are comprised and one bonding hand is bound to each of the aromatic ring (a) and the aromatic ring (b).

[10] A membrane-electrode assembly, wherein a gas diffusion layer, a catalyst layer, the electrolyte membrane according to any one of [1] to [9], a catalyst layer and a gas diffusion layer are laminated in this order.
[11] A polymer electrolyte fuel cell comprising the membrane-electrode assembly according to [10].

EFFECTS OF THE INVENTION

By the present invention, an electrolyte membrane which is excellent in power generation capability and water

repellency in well balance and by using which a membrane-electrode assembly which unlikely undergoes separation of catalyst layer in hot water can be produced at a relatively low heat transfer temperature and in a short time can be obtained. Thus, when producing a membrane-electrode assembly by using such a electrolyte membrane, a membrane-electrode assembly in which a catalyst layer is hardly damaged and which is excellent in power generation capability, durability and the like can be easily produced.

In addition, by the present invention, an electrolyte membrane which is excellent in power generation capability, water repellency, adherence with an electrode and dimensional stability in wet-and-dry cycle can be obtained. Furthermore, by using such an electrolyte membrane for making a fuel cell, a fuel cell in which flooding can be suppressed and which is excellent in power generation capability, durability and the like can be obtained.

BRIEF DESCRIPTION OF THE DRAWINGS

Fig. 1 shows a transmission electron microscope (TEM) photograph of the cross section of the electrolyte membrane obtained in Example 6.

MODES FOR CARRYING OUT THE INVENTION

Electrolyte membrane

The electrolyte membrane of the present invention contains a polymer (1) comprising a hydrophobic structural unit and a structural unit having a proton-conducting group and a polymer (2) comprising a hydrophobic structural unit having no sulfonic group which is different from the hydrophobic structural unit of the polymer (1).

Such an electrolyte membrane is excellent in power generation capability, water repellency, adherence with an electrode and dimensional stability in wet-and-dry cycle in well balance. Further, by using such an electrolyte membrane, a membrane-electrode assembly in which separation of catalyst layer in hot water unlikely occurs can be produced at a relatively low heat transfer temperature.

The water contact angle of the electrolyte membrane (surface) of the present invention is preferably 50 to 120 degree, more preferably 50 to 110 degree, and even more preferably 60 to 100 degree.

The water contact angle value can be measured by the method described in Examples below for example.

When water contact angle value of an electrolyte membrane is within the range, an electrolyte membrane which is excellent in water repellency and adherence with an electrode can be obtained.

When such an electrolyte membrane is used for a system which produces water in operation, particularly for a fuel cell, flooding can be suppressed due to water repellency of the surface, and a fuel cell excelling in power generation capability, durability and the like can be obtained due to excellent adherence with an electrode.

For the electrolyte membrane of the present invention, the ion exchange capacity measured by the same method as described in the Examples below using the electrolyte membrane is preferably 0.5 to 5.0 meq/g, more preferably 1.4 to 3.8 meq/g. The ion exchange capacity is preferably within the range so that an electrolyte membrane which is excellent in proton conductivity and water resistance and has high power generation capability can be obtained.

For the electrolyte membrane of the present invention, the thickness of the membrane after dried is preferably 5 to 200 μm, more preferably 10 to 150 μm. Even in cases where the electrolyte membrane of the present invention is a laminated membrane or a reinforced electrolyte membrane, these thicknesses is preferably within the range.

Polymer (1)

The polymer (1) is not restricted as long as it has a hydrophobic structural unit and a structural unit having a proton-conducting group, and may be a polymer or an oligomer.

In the present invention, the structural unit having a proton-conducting group may be simply a proton-conducting group. Examples of the proton-conducting group include a sulfonic group, a phosphonic acid group, a carboxy group, a bissulfonylimide group and the like, and a sulfonic group is preferred.

Examples of the hydrophobic structural unit include, but are not particularly limited to, polyaromatic hydrocarbon, polyether, polyether ether ketone, polyether sulfone, polyphenylene sulfide, polyimide or polybenzazole structural unit which has a aromatic ring in its main chain.

Known polymers may be used as the polymer (1), and for example, but are not limited to, all-fluorinated carbon polymers having a sulfonic group commercially available under the trade names of Nafion (registered trademark, Du Pont Co., Ltd.), Aciplex (registered trademark, Asahi Chemical Industry Co. Ltd.), Flemion (registered trademark, Asahi Glass Co. Ltd.); polymers having aromatic ring on the main chain skeleton and having a sulfonic group such as polyaromatic hydrocarbons, polyether ether ketones, polyphenylene sulfides, polyimides or polybenzazoles; and the like may be used.

The number average molecular weight of the polymer (1) is preferably 10,000 to 1,000,000, more preferably 30,000 to 300,000, and the weight average molecular weight of the polymer (1) is preferably 10,000 to 1,000,000, more preferably 50,000 to 400,000. The molecular weight is preferably within the range because the hot water resistance of the electrolyte membrane to be obtained tends to be increased. The methods for measuring the number average molecular weight and the weight average molecular weight are as described in the Examples below.

Tg of the polymer (1) by DSC (temperature rising rate: 20°C/min) is, without limitation, preferably 100 to 250°C, more preferably 120 to 250°C in view of being able to obtain an electrolyte membrane excelling in stability in hot water, and a fuel cell excelling in creep resistance in operation at a high temperature of 80°C or higher.

The ion exchange capacity of the polymer (1) is preferably 0.5 to 5.0 meq/g, more preferably 1.4 to 3.8 meq/g. When the ion exchange capacity is within the range, an electrolyte membrane excelling in proton conductivity and power generation capability and having sufficiently high water resistance can be obtained. The method for measuring ion exchange capacity is as described in the Examples below.

In particular, the polymer (1) is preferably a polymer consisting of a hydrophilic segment (A1) comprising a structural unit having a proton-conducting group and a hydrophobic segment (B1) comprising a hydrophobic structural unit, and preferably is a polymer consisting of a hydrophilic segment (A1) consisting of a structural unit having a proton-conducting group and a hydrophobic segment (B1) consisting of a hydrophobic structural unit. In this case, although the polymer (1) may be a block polymer or a random polymer, a block copolymer of a hydrophilic segment (A1) and a hydrophobic segment (B1) is preferred from the viewpoint of, for example, being able to obtain an electrolyte membrane which is more superior in the power generation capability and the dimensional stability in wet-and-dry cycle.

It is preferred that the hydrophilic segment (A1) and the hydrophobic segment (B1) are directly bound not through a binding group. For example, if a binding group exists between the hydrophilic segment (A1) and the hydrophobic segment (B1) and the binding group is an ether linkage (-O-), there is a tendency that the radical resistance of the electrolyte membrane to be obtained is inferior so that deterioration of the membrane is likely to take place.

The content of each segment in the polymer (1) is determined depending on the desired properties such as ion exchange capacity and number average molecular weight of the polymer.

When the sum content of the segment (A1) and (B1) is 100% by weight, the content of the segment (A1) is preferably 15 to 95% by weight, more preferably 25 to 85% by weight, especially preferably 35 to 75% by weight, and the content of the segment (B1) is preferably 5 to 85% by weight, more preferably 15 to 75% by weight, specially preferably 25 to 65% by weight.

The amounts to be used of raw material compounds of the segment (A1) and (B1) may be adjusted to obtain a polymer in which the amount of each segment is within the range. The content of each segment in a polymer (1) can be confirmed from the used amounts of these raw material compounds.

In the present invention, the term "segment" means an oligomer unit or a polymer unit in which three or more structural units constituting the segment are connected, and the number of structural units being connected to constitute the segment is preferably 5 or more, more preferably 10 or more.

Hydrophilic segment (A1)

Example of the hydrophilic segment (A1) is not particularly limited as long as it has a proton-conducting group and show hydrophilicity, and include a hydrophilic segment having a aromatic ring in its main chain and containing a proton-conducting group such as sulfonic group. In view of being able to obtain an electrolyte membrane excelling in power generation capability and dimensional stability in wet-and-dry cycle and the like, the segment preferably is one comprising structural unit (i) which comprise a sulfonic group and an aromatic ring and have two bonding hands and wherein both of the two bonding hands are bound to the aromatic ring or one bonding hand is bound to an aromatic ring (a) and the other bonding hand is bound to an aromatic ring (b) connected to the aromatic ring (a) via a single bond or at least one aromatic ring.

When the hydrophilic segment (A1) is such a segment, an electrolyte membrane having higher continuity of the hydrophilic segment and higher proton conductivity tends to be obtained when compared with the case where the conventional polymers are used.

The hydrophilic segment (A1) may consist of one kind of structural unit, or may comprise two or more kinds of structural units.

The number average molecular weight of the hydrophilic segment (A1) is preferably 1,500 to 20,000, more preferably 2,500 to 10,000. Being within the range is preferred because an electrolyte membrane having high proton conductivity can be obtained. The methods for measuring the number average molecular weight is as described in the Examples below.

The structural unit (i) means, for example, a structural unit represented by the following formula (i).

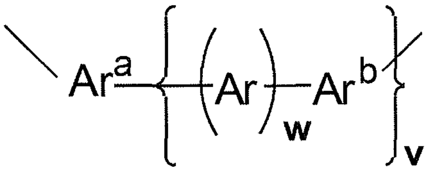

. . . (i)

In the formula (i), Ar, $Ar^a$ and $Ar^b$ independently represent an aromatic group having a benzene ring, a condensed aromatic ring or a nitrogen-containing heterocycle optionally substituted with a proton-conducting group, a halogen atom, a nitrile group or $R^{22}$-E- (wherein E and $R^{22}$ independently have the same meanings as E and $R^{22}$ in the following formula (1)), and "w" represents 0 or an positive integer and "v" represents 0 or 1, with the proviso that the formula (i) has at least one proton-conducting group.

Among the single lines in the end of the structural unit in the formula (i), single lines showing no substituent at one end (referred to as "bonding hand" in the present invention) represent a connection portion with an adjacent structural unit. In the present specification, similar descriptions have similar meaning. That is, divalent structural unit refers to a structural unit having two bonding hands.

From the viewpoint of being able to obtain an electrolyte membrane which has high continuity of hydrophilic segments and high proton conductivity, the hydrophilic segment (A1) is preferably a segment comprising a structural unit represented by the following formula (5) (hereinafter also referred to as "structural unit (5)"), and more preferably is a segment consisting of the structural unit (5).

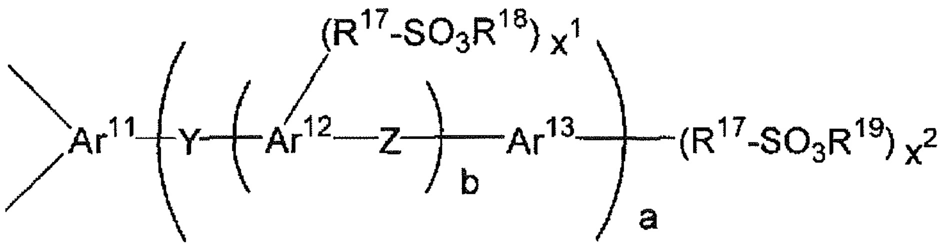

. . . (5)

In the formula (5), $Ar^{11}$, $Ar^{12}$ and $Ar^{13}$ independently represent an aromatic group having a benzene ring, a condensed aromatic ring or a nitrogen-containing heterocycle optionally substituted with a halogen atom, a nitrile group, a C1-C20 monovalent hydrocarbon group or a C1-C20 monovalent halogenated hydrocarbon group.

Examples of the condensed aromatic ring include naphthalene ring, fluorene ring, dibenzofuran ring, dibenzothiophene ring and the like.

Examples of the nitrogen-containing heterocycle include 5-membered and 6-membered cyclic structures comprising nitrogen atoms. The number of nitrogen atoms in heterocycle is not restricted particularly as long as it is one or more. In addition to nitrogen, oxygen atoms or sulfur atoms may be comprised in heterocycle.

$Ar^{11}$ is preferably benzene ring or biphenyl, more preferably benzene ring.

Y and Z independently represent a direct bond, -O-,-S-, -CO-, $-SO_2-$, -SO-, $-(CH_2)_u-$, $-(CF_2)_u-$ (u is an integer of 1 to 10), $-C(CH_3)_2-$ or $-C(CF_3)_2-$ and, among these, direct bond, -O-, -CO-, $SO_2-$ or $-(CF_2)_u-$ is preferred.

$R^{17}$ independently represents a direct bond, $-O(CH_2)_p-$, $-O(CF_2)_p-$, $-(CH_2)_p-$ or $-(CF_2)_p-$ (p is an integer of 1 to 12) and, among these, a direct bond, $-O(CF_2)_p-$, $-(CF_2)_p-$ are preferred in view of proton conductivity. "p" is preferably an integer of 1 to 6, and an integer of 1 to 4 is preferred.

$R^{18}$ and $R^{19}$ independently represent a hydrogen atom or a protecting group, with the proviso that at least one of all $R^{18}$ and $R^{19}$ comprised in the structural unit (5) is hydrogen atom.

Among these, $R^{18}$ and $R^{19}$ preferably is hydrogen atom or nitrogen-containing cation.

The protecting group means an ion, atom, atomic group or the like used to temporarily protect a reactive group ($-SO_3-$ or $-SO_3^-$). Specific examples of the protecting group include an alkali metal atom, an aliphatic hydrocarbon group, an alicyclic group, an oxygen-containing heterocycle group, a nitrogen-containing cation and the like.

$x^1$ independently represents an integer of 0 to 6, preferably an integer of 0 to 4, more preferably an integer of 0 to 2, and $x^2$ represents an integer of 1 to 7, preferably an integer of 1 to 5, more preferably an integer of 1 to 3, even more preferably 1 or 2, and "a" represents 0 or 1, and "b" represents an integer of 0 to 20, preferably an integer of 0 to 3, more preferably 0 or 1, even more preferably 0.

In addition to the structural unit (5) having a sulfonic group, the hydrophilic segment (A1) may includes, as a structural unit having a proton-conducting group other than sulfonic group, for example, a structural unit (5') having a phosphonic acid group or an aromatic structural unit having a nitrogen-containing heterocycle described in, for example, JP 2011-089036, WO 2007/010731 or the like.

Hydrophobic segment (B1)

The hydrophobic segment (B1) is not particularly restricted as long as the segment shows hydrophobicity.

The hydrophilic segment (B1) may consist of one kind of structural unit, or may comprise two or more structural units.

The number average molecular weight of the hydrophobic segment (B1) is preferably 1,000 to 60,000, more preferably 3,000 to 40,000. The number average molecular weight is preferably within the rang so that an electrolyte membrane having high hot water resistance and excellent mechanical strength can be obtained. The methods for measuring the number average molecular weight are as described in the Examples.

Preferred example of the hydrophobic segment (B1) includes a hydrophobic segment which has an aromatic ring on the main chain and does not contain a proton-conducting group such as sulfonic group. From the viewpoint of, for example, being able to obtain an electrolyte membrane which is more superior in inhibition of hot-water swelling, the hydrophobic segment (B1) is preferably a segment comprising at least one kind of structural unit selected from the group consisting of a structural unit represented by the following formula (1) (hereinafter also referred to as "structural unit (1)"), a structural unit represented by the following formula (2) (hereinafter also referred to as "structural unit (2)") and a structural unit represented by the following formula (3') (hereinafter also referred to as "structural unit (3')"), and more preferably is a segment consisting of at least one kind of structural unit selected from the group consisting of the structural unit (1) and the structural unit (2).

By containing in the polymer (1) any one of structural units (1) to (3'), particularly a structural unit (1) or (2), hydrophobicity of the polymer are prominently promoted. Thus, an electrolyte membrane which has excellent hot water resistance while having the same proton conductivity as that of a conventional one can be obtained. Furthermore, when the segment (B1) comprises a nitrile group, an electrolyte membrane which has high toughness and high mechanical strength can be obtained.

From the viewpoint of being able to obtain an electrolyte membrane excelling in inhibition of hot-water swelling and the like, the hydrophobic segment (B1) preferably is one comprising structural units (i') which comprise an aromatic ring and have two bonding hands and wherein both of the two bonding hands are bound to the aromatic ring or one bonding hand is bound to an aromatic ring (a) and the other bonding hand is bound to an aromatic ring (b) connected to the aromatic ring (a) via a single bond or at least one aromatic ring.

The structural unit (i') means, for example, a structural unit represented by the following formula (i').

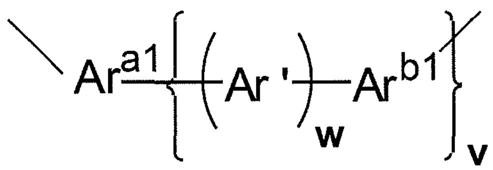

... (i')

In the formula (i'), Ar', $Ar^{a1}$ and $Ar^{b1}$ independently represent an aromatic group having a benzene ring, a condensed aromatic ring or a nitrogen-containing heterocycle optionally substituted with a halogen atom, a hydroxy group, a nitro group, a nitrile group or $R^{22}$-E-(wherein E and $R^{22}$ independently have the same meanings as E and $R^{22}$ in the following formula (1)), and "w" represents 0 or an positive integer and "v" represents 0 or 1.

When the hydrophilic segment (A1) is a structure represented by the formula (i), particularly is a segment consisting of the structural unit (5) and when the hydrophobic segment (B1) is a structure represented by the formula (i'), particularly is a segment consisting of the structural unit (1) and/or the structural unit (2), an electrolyte membrane excelling in power generation capability and dimensional stability in wet-and-dry cycle tends to be obtained, and effects by combination with polymer (2) may be exerted more strongly, so that it is preferred.

Structural unit (1)

By containing a structural unit (1) in the hydrophobic segment (B1), the segment (B1) has increased stiffness and has increased aromatic ring density, so that hot water resistance, radical resistance against peroxide, gas barrier property, mechanical strength, dimensional stability and the like of an electrolyte membrane comprising a polymer (1) to be obtained can be promoted.

The hydrophobic segment (B1) may comprise one kind of structural unit (1), or may comprise two or more kinds of structural units (1).

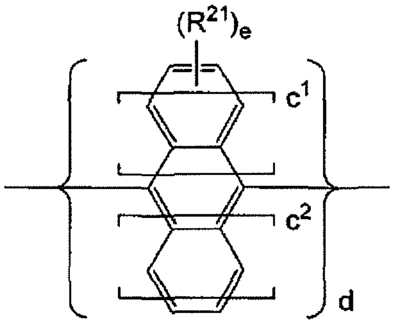

• • • (1)

In the formula (1), at least one replaceable carbon atom which constitutes aromatic ring may be replaced with nitrogen atom; $R^{21}$ independently represents a halogen atom, a hydroxy group, a nitro group, a nitrile group or $R^{22}$-E-(wherein E represents a direct bond, -O-, -S-, -CO-, $-SO_2-$, -CONH-, -COO-, $-CF_2-$, $-CH_2-$, $-C(CF_3)_2-$ or $-C(CH_3)_2-$; $R^{22}$ represents an alkyl group, a halogenated alkyl group, an alkenyl group, an aryl group, a halogenated aryl group or a nitrogen-containing heterocycle, wherein at least one hydrogen atom of these groups may be further substituted with at least one kind of group selected from the group consisting of a hydroxy group, a nitro group, a nitrile group and $R^{22}$-E-); and a plurality of $R^{21}$ may be bound to form a cyclic structure.

When $R^{21}$ is $R^{22}$-E- and the $R^{22}$ is further substituted with $R^{22}$-E-, then a plurality of E may be the same or different, and the plurality of $R^{22}$ (however which is structure of moiety excluding the structural difference caused by substitution) may also be the same or different. Similarly, in the present invention, when there is a plurality of groups represented by the same symbol in one formula, they may be the same or different. However, when a plurality of $R^{22}$ are included in one formula, the upper limit of $R^{22}$ is preferably 5.

Examples of an alkyl group, a halogenated alkyl group, an alkenyl group, an aryl group and a halogenated aryl group in the $R^{22}$ include a C1-C20 alkyl group, a C1-C20 halogenated alkyl group, a C2-C20 alkenyl group, a C6-C20 aromatic hydrocarbon group, and a C6-C20 halogenated aromatic hydrocarbon group, respectively.

Examples of the cyclic structure formed by binding of a plurality of $R^{21}$ include, but are not particularly limited to, an aromatic group, a C3-C20 cycloalkyl group such as a cyclopentyl group and a cyclohexyl group and an oxygen-containing heterocycle group optionally substituted by a halogen atom, a nitrile group, a C1-C20 monovalent hydrocarbon group or a C1-C20 monovalent halogenated hydrocarbon group.

Example of the $R^{22}$ preferably includes an aryl group.

Example of "E" preferably includes carbonyl group in view of high polymerization activity in polymerization.

"$c^1$" and "$c^2$" independently represent 0 or an integer of 1 or more, preferably 0 or 1, more preferably 0; and "d" represents an integer of 1 or more, preferably an integer of 1 to 300.

"e" independently represents 0 to an integer of $(2c^1+2c^2+4)$, and preferably is an integer of 1 or more in view of the improvement in the solubility of the polymer to be obtained and the improvement in the adherence with electrode or the like due to its decreased softening temperature.

Structural unit (2)

When the hydrophobic segment (B1) comprises a structural unit (2), an electrolyte membrane which has improved radical resistance against peroxide and is superior in power generation durability is considered to be obtained, so that it is preferred.

When the hydrophobic segment (B1) contains a structural unit (2), the segment (B1) can be imparted with appropriate flexibility (tenderness) so that the toughness of an electrolyte membrane containing a polymer to be obtained can be improved.

The hydrophobic segment (B1) may comprises one kind of structural unit (2), or may comprises two or more kinds of structural units (2).

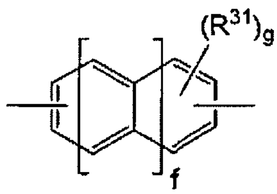

• • • (2)

In the formula (2), at least one replaceable carbon atom which constitutes aromatic ring may be replaced with nitrogen atom; $R^{31}$ independently represents a halogen atom, a hydroxy group, a nitro group, a nitrile group or $R^{22}$-E-(wherein E and $R^{22}$ independently have the same meanings as E and $R^{22}$ in the formula (1)); and a plurality of $R^{31}$ may be bound to form a cyclic structure.

"f" represents 0 or an integer of 1 or more, preferably 0 or 1, more preferably 0; and "g" represents an integer of 0 to (2f+4). The structural unit represented by formula (2) is a structural unit other than the structural unit represented by formula (1).

Examples of the cyclic structure formed by binding of a plurality of $R^{31}$ include, but are not particularly limited to, structures similar to the cyclic structure formed by binding of a plurality of $R^{21}$ and the like.

$R^{31}$ preferably is a nitrile group in view of high polymerization activity in copolymerization, and higher toughness and mechanical strength of an electrolyte membrane to be obtained.

When the segment (B1) is a segment comprising the structural unit (1) and the structural unit (2), the segment (B1) may be a structure formed by block copolymerization between the structural unit (1) and the structural unit (2), but is preferably a structure formed by random copolymerization between the structural unit (1) and the structural unit (2) from the viewpoint of being able to obtain the effects of the structural unit (1) and (2) sufficiently.

When the segment (B1) is a segment comprising the structural unit (1) and the structural unit (2) and when the sum content of the structural unit (1) and (2) in the segment (B1) is 100 mol%, then the content of the structural unit (1) is preferably 50 to 99.9 mol%, more preferably 80 to 99.9 mol%, especially preferably 90 to 99.9 mol%, and the content of the structural unit (2) is preferably 0.1 to 50 mol%, more preferably 0.1 to 20 mol%, especially preferably 0.1 to 10 mol% from the viewpoint that the above-described effects become more remarkable and the like.

When the segment (B1) is a segment comprising the structural unit (1) and the structural unit (2) and when the sum content of the structural unit (1) and (2) in the segment (B1) is 100% by weight, then the content of the structural unit (1) is preferably 33 to 99% by weight, more preferably 80 to 99% by weight, especially preferably 90 to 99% by weight, and the content of the structural unit (2) is preferably 1 to 67% by weight, more preferably 1 to 20% by weight, especially preferably 1 to 10% by weight from the viewpoint that the above-described effects become more remarkable and the like.

The content of the structural unit (1) is also preferably within the range relative to 100% by weight of the segment (B1).

Structural unit (3')

When the hydrophobic segment (B1) contains a structural unit (3'), the segment (B1) can be imparted with appropriate flexibility (tenderness) so that the toughness of an electrolyte membrane containing a polymer to be obtained can be improved.

The hydrophobic segment (B1) may comprises one kind of structural unit (3'), or may comprises two or more kinds of structural units (3').

When the segment (B1) is a segment comprising the structural unit (1) and the structural unit (3') and when the sum content of the structural unit (1) and (3') in the segment (B1) is 100 mol%, then the content of the structural unit (1) is preferably 0.1 to 99.9 mol%, more preferably 0.5 to 99.5 mol%, especially preferably 1 to 99 mol%, and the content of the structural unit (3') is preferably 0.1 to 99.9 mol%, more preferably 0.5 to 99.5 mol%, especially preferably 1 to 99 mol% from the viewpoint that the above-described effects become more remarkable and the like.

When the segment (B1) is a segment comprising the structural unit (1) and the structural unit (3') and when the sum content of the structural unit (1) and (3') in the segment (B1) is 100% by weight, then the content of the structural unit (1) is preferably 0.1 to 99% by weight, more preferably 0.5 to 97% by weight, especially preferably 1 to 90% by weight, and the content of the structural unit (3') is preferably 0.1 to 99.9% by weight, more preferably 3 to 99.5% by weight, especially preferably 10 to 99% by weight from the viewpoint that the above-described effects become more remarkable and the like.

The content of the structural unit (1) is also preferably within the range relative to 100% by weight of the segment (B1).

A preferred example of the segment (B1) also includes the case where the segment (B1) consists of the structural unit (3').

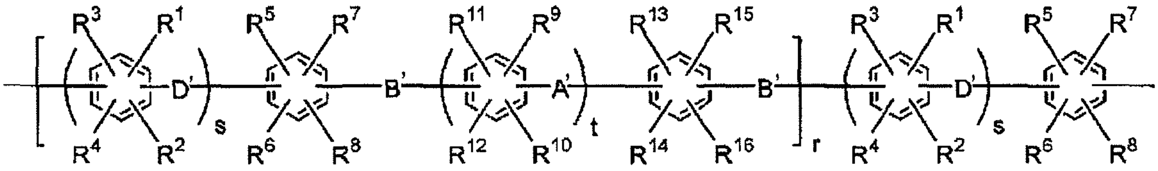

(3')

In the formula (3'), A' and D' each independently represent a direct bond, -O-, -S-, -CO-, $-SO_2-$, -SO-,-CONH-, -COO-, $-(CF_2)_i-$ (wherein "i" is an integer of 1 to 10), $-(CH_2)_j-$ (wherein "j" is an integer of 1 to 10), $-CR'_2-$(wherein R' represents an aliphatic hydrocarbon group, an aromatic hydrocarbon group or a halogenated hydrocarbon group), a cyclohexylidene group or a fluorenylidene group and, among them, a direct bond, -O-, -CO-, $-SO_2-$, $-CR'_2-$, a cyclohexylidene group and a fluorenylidene group are preferred.

The R' preferably is a alkyl group and a perfluoroalkyl group, and more preferably is a methyl group and a trifluoromethyl group.

B' independently represents an oxygen atom or a sulfur atom, and preferably is an oxygen atom.

$R^1$ to $R^{16}$ each independently represent a hydrogen atom, a halogen atom, a hydroxy group, a nitro group, a nitrile group or $R^{22}$-E- (wherein E and $R^{22}$ each independently have the same meanings as E and $R^{22}$ in the formula (1)); a plurality of groups of $R^1$ to $R^{16}$ may be bound to form a cyclic structure.

The above-described $R^1$ to $R^{16}$ independently preferably is a hydrogen atom, a nitrile group and a t-butyl group.

Examples of the cyclic structure formed by binding of a plurality of groups of $R^1$ to $R^{16}$ include, but are not particularly limited to, an aromatic group, a C3-C20 cycloalkyl group such as a cyclopentyl group and a cyclohexyl group and an oxygen-containing heterocycle group optionally substituted with a halogen atom, a nitrile group, a C1-C20 monovalent hydrocarbon group or a C1-C20 monovalent halogenated hydrocarbon group. When a cyclic structure is formed, benzene rings in the formula (3') may also be bound together via direct bond although it is not listed in the above illustration.

"s" and "t" independently represent an integer of 0 to 4, preferably an integer of 0 to 2; and "r" represents 0 or an integer of 1 or more, preferably 0 to 100, more preferably 0 to 80.

Method for synthesizing polymer (1)

The polymer (1) can be synthesized by a known process including, but not limited to, by carrying out a reaction using a compound which serves as the structural unit (e.g., dihalides having the structural unit) in the presence of a catalyst which contains transition metals and a solvent, and as required introducing a proton-conducting group via a process such as replacement of a sulfonate ester group or the like with a sulfonic group, sulfonation by using sulfonating agent or the like.

Polymer (2)

The polymer (2) is not restricted as long as it has a hydrophobic structural unit which does not has a sulfonic group differing from a hydrophobic structural unit of the polymer (1), and may be a polymer or an oligomer. Further, it is particularly preferred that the polymer (1) and the polymer (2) are incompatible.

Inclusion of this polymer (2) along with the polymer (1) in the electrolyte membrane of the present invention allows to produce a membrane-electrode assembly can be obtained, by which in particular, the heat transfer temperature can be relatively lowered; the transfer time can be relatively shortened in production of the membrane-electrode assembly; and a catalyst layer hardly causes separation from an electrolyte membrane when the membrane-electrode assembly is used in hot water even if it is produced in such a low temperature and in such a short time.

Further, an electrolyte membrane whose water contact angle is within the range as well as an electrolyte membrane excelling in water repellency can be obtained, which allows, by usage of such an electrolyte membrane in a fuel cell, to obtain a fuel cell in which flooding can be suppressed and which has excellent power generation capability, durability and the like.

Although the polymer (2) may have the same structural unit as a hydrophobic structural unit comprised in the polymer (1), it is preferred that the polymer (2) does not have the same segment as a hydrophobic segment of the polymer (1) from the viewpoint that: a polymer not compatible with polymer (1) can be obtained; an electrolyte membrane excelling in water repellency, adherence with an electrode and dimensional stability in wet-and-dry cycle in well balance can be obtained; and a membrane-electrode assembly in which separation of a catalyst layer in hot water hardly occurs can be produced in relatively low heat transfer temperature. By using such a polymer (2), an electrolyte membrane with

large water contact angle tends to be possibly obtained.

The fact that the polymer (2) is incompatible with the polymer (1) can be confirmed from 2D or 3D-TEM pictures showing that the polymer (1) and the polymer (2) exist separately, in particular that the polymer (2) exists in the polymer (1) separately.

Since the polymer (2) and the polymer (1) are incompatible, there is tendency in which the polymer (2) is likely to exist on both surfaces of an electrolyte membrane, resulting in increased water contact angle of the electrolyte membrane surface compared to a membrane to which the polymer (2) is not added, which makes the membrane surface more hydrophobic. Therefore, by measuring the water contact angle of an electrolyte membrane surface, the fact that the polymer (1) and (2) are incompatible can be assumed.

The number average molecular weight of the polymer (2) is preferably 1,000 to 60,000, more preferably 3,000 to 40,000. When the number average molecular weight is within the range, the hot water resistance of an electrolyte membrane to be obtained is increased, so that it is preferred. The method for measuring number average molecular weight is as described in the Examples below.

Tg of the polymer (2) by DSC (temperature rising rate: 20°C/min) is, without particular limitation, preferably not higher than 220°C, more preferably 20 to 220°C, especially preferably 30 to 220°C from the viewpoint that, for example, a membrane-electrode assembly in which separation of a catalyst layer in hot water hardly occurs can be produced at a relatively low heat transfer temperature.

Examples of the polymer (2) include, in particularly, an aromatic polymer, a fluorine-containing polymer, a non-fluororubber and the like, and preferably is an aromatic polymer and a fluorine-containing polymer from the viewpoint, for example, that: an electrolyte membrane with large water contact angle tends to be possibly obtained; and a membrane-electrode assembly in which separation of a catalyst layer in hot water hardly occurs can be produced at a relatively low heat transfer temperature. Examples of the aromatic polymer include, in view of chemical durability and the like, preferably an aromatic polyether polymer, and in view of being able to obtain an electrolyte membrane excelling in water repellency and adherence with an electrode and the like, especially preferably is a polymer having a hydrophobic structural unit to which aromatic rings are bound via an ether group, and even more preferably is an aromatic polyether polymer comprising a structural unit (hereinafter also referred to as "structural unit (3)") represented by the following formula (3).

The polymer (2) may comprise one kind of structural unit (3) or comprise two or more kinds of structural unit (3).

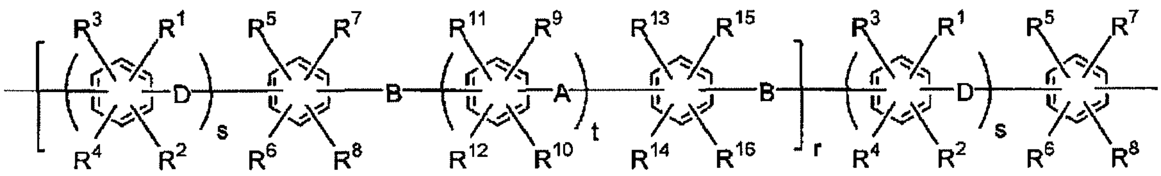

• • • (3)

In the formula (3), A and D each independently represent a direct bond, -O-, -S-, -CO-, $-SO_2-$, -SO-,-CONH-, -COO-, $-(CF_2)_i-$ (wherein "i" is an integer of 1 to 10), $-(CH_2)_j-$ (wherein "j" is an integer of 1 to 10), $-CR'_2-$(wherein R' represents an aliphatic hydrocarbon group, an aromatic hydrocarbon group or an halogenated hydrocarbon group), a cyclohexylidene group or a fluorenylidene group and, among them, a direct bond, -O-, -CO-, $-SO_2-$, $-CR'_2-$, a cyclohexylidene group and a fluorenylidene group are preferred.

Examples of the above-mentioned R' include a methyl group, an ethyl group, a propyl group, an isopropyl group, a butyl group, an isobutyl group, a t-butyl group, a hexyl group, an octyl group, a decyl group, an octadecyl group, an ethylhexyl group, a phenyl group, a trifluoromethyl group, substituents in which a part or all of hydrogen atoms in these groups are halogenated, and the like.

Examples of the above-mentioned R' preferably include an alkyl group or a perfluoroalkyl group and more preferably is a methyl group or a trifluoromethyl group.

B independently represents -O- or -S- and preferably is -O-.

In the formula (3), at least one of A, B and D is -O-; and when "r" is 0, "s" is an integer of 1 to 4.

$R^1$ to $R^{16}$ each independently represent a hydrogen atom, a halogen atom, a hydroxy group, a nitro group, a nitrile group or $R^{22}$-E- (E and $R^{22}$ independently have the same meanings as E and $R^{22}$ in the formula (1)), and a plurality of groups of $R^1$ to $R^{16}$ may be bound to form a cyclic structure.

Examples of the cyclic structure formed by binding of a plurality of groups of $R^1$ to $R^{16}$ include, but are not particularly limited to, an aromatic group, a C3-C20 cycloalkyl group such as a cyclopentyl group and a cyclohexyl group and an oxygen-containing heterocycle group optionally substituted with a halogen atom, a nitrile group, a C1-C20 monovalent hydrocarbon group or a C1-C20 monovalent halogenated hydrocarbon group. When a cyclic structure is formed, benzene rings in the formula (3) may also be bound together via direct bond although it is not listed in the above

illustration.

Examples of $R^1$ to $R^{16}$ preferably include a hydrogen atom, a nitrile group and a t-butyl group, and preferably is a nitrile group from the viewpoint that an electrolyte membrane having high toughness and mechanical strength can be produced and the like.

"s" and "t" independently represent an integer of 0 to 4, preferably an integer of 0 to 2; and "r" represents 0 or an integer of 1 or more, preferably 0 to 100, more preferably 0 to 80.

Method for synthesizing aromatic polyether polymer

The aromatic polyether polymer can be synthesized by a known process including, but not limited to, by carrying out a reaction using a compound serving as the structural unit (3) (e.g.: dihalide or dihydroxy compound having a part of structure of the structural unit (3)) in the presence of a catalyst which includes alkali metal salt or a solvent.

Fluorine-containing polymer

Example of the fluorine-containing polymer to be preferably used includes solvent-soluble fluorine-containing polymers. Such fluorine-containing polymers have the characteristic features of being excellent in heat resistance, chemical resistance, mechanical characteristics, abrasion resistance and the like and having small permeability to gases.

Further, the solvent-soluble fluorine-containing polymers have the characteristics that its usage allows to easily produce an electrolyte membrane having a continuous phase consisting of the polymer (1) and a dispersed phase consisting of the fluorine-containing polymer.

The fluorine-containing polymers may be used individually or two or more of them may be used in combination.

Examples of such solvent-soluble fluorine-containing polymers to be used include, but not limited to, vinylidene fluoride homopolymer (copolymer), fluoroolefin/hydrocarbon olefin copolymer, fluoroacrylate copolymer, fluoroepoxy compound and the like.

Among these, (1) vinylidene fluoride homopolymer (copolymer) and (2) fluoroolefin/hydrocarbon olefin polymer are preferred in view of being used with the polymer (1) in combination. The above-described (2) fluoroolefin/hydrocarbon olefin polymer is a polymer which differs from the above-described (1) vinylidene fluoride homopolymer (copolymer).

Preferred examples of the vinylidene fluoride homopolymer (copolymer) include, but not limited to, polyvinylidene fluoride, a copolymer of vinylidene fluoride and hexafluoropropylene, a copolymer of vinylidene fluoride and tetrafluoroethylene, a terpolymer of vinylidene fluoride, hexafluoropropylene and tetrafluoroethylene, and an alternating copolymer of tetrafluoroethylene, propylene and vinylidene fluoride.

Such polyvinylidene fluoride homopolymers (copolymers) are preferred particularly because they are excellent in impact resistance over a wide temperature range; they are also excellent in high temperature mechanical properties, including having high heat distortion temperature; and almost all processing methods can be applied to them.

Preferred examples of the fluoroolefin/hydrocarbon olefin copolymer include, but not limited to, an alternating copolymer of tetrafluoroethylene and propylene, an alternating copolymer of chlorotrifluoroethylene and propylene, copolymers of tetrafluoroethylene or chlorotrifluoroethylene and ethyl vinyl ether, chloroethyl vinyl ether, isobutyl vinyl ether or hydroxyalkylvinyl ether, a copolymer of fluoroolefin and acrylate, a copolymer of fluoroolefin and methacrylate, a copolymer of fluoroolefin and vinyl carboxylate and the like.

In particular, such fluoroolefin/hydrocarbon olefin copolymers are desirably used in the viewpoint that toughness of the electrolyte membrane to be obtained can be increased and the like.

The weight-average molecular weight of the fluorine-containing polymer in terms of polystyrene by gel permeation chromatography (GPC) preferably is 5,000 to 10,000,000, more preferably 50,000 to 1,000,000. If the molecular weight is too small, excellent properties of the fluorine-containing polymer tend not to be able to be exhibited. Further, if the molecular weight is too high, production of the electrolyte membrane tends to become difficult.

Other components

In addition to the polymer (1) and (2), the electrolyte membrane of the present invention may comprise a metallic compound or a metal ion. Examples of the metallic compound or the metal ion include metallic compounds comprising metal atoms such as aluminum (Al), manganese (Mn), niobium (Nb), tantalum (Ta), chromium (Cr), molybdenum (Mo), tungsten (W), iron (Fe), ruthenium (Ru), nickel (Ni), tin (Sn), palladium (Pd), platinum (Pt), silver (Ag), cerium (Ce), vanadium (V), neodymium (Nd), praseodymium (Pr), samarium (Sm), cobalt (Co), gadolinium (Gd), terbium (Tb), dysprosium (Dy), holmium (Ho) and erbium (Er) or metal ions thereof.

They may be used individually or two or more of them may be used in combination.

Method for producing an electrolyte membrane

The electrolyte membrane of the present invention can be produced by comprising, for example, a step of applying a composition obtained by mixing the polymer (1), the polymer (2), an organic solvent and the like on a substrate by a known method such as die coating, spray coating, knife coating, roll coating, spin coating or gravure coating method. In particular, the electrolyte membrane can be obtained by applying the composition on a substrate, then drying the applied composition, and as required, peeling the obtained membrane from the substrate.

The amount of the polymer (1) to be used based on 100% by weight of the electrolyte membrane is preferably 50 to 99.9% by weight, more preferably 80 to 99.5% by weight, especially preferably 90 to 99% by weight in view of being able to produce a membrane-electrode assembly in which separation of a catalyst layer in hot water hardly occurs at a relatively low heat transfer temperature and obtain an electrolyte membrane excelling in power generation capability and water repellency in well balance, and the like.

The amount of the polymer (2) to be used based on 100% by weight of the electrolyte membrane is preferably 0.1 to 50% by weight, more preferably 0.5 to 20% by weight, especially preferably 1 to 10% by weight by the similar reason. Preferred amount range of the polymer (2) to be used is the same as above even based on 100% by weight of the polymer (1).

When the electrolyte membrane of the present invention is produced, the polymer (1) and (2) may be used individually or two or more of them may be used in combination.

The substrate to be used is not particularly restricted as long as it is a substrate used when usual compositions are applied, and for example, resin substrates, metallic substrates, glass substrates and the like are used, and preferably used is substrates made of thermoplastic resin such as PET film.

The organic solvent preferably is a solvent which dissolves or swells the polymer (1) and (2), including aprotic polar solvents such as NMP, N,N-dimethylformamide, γ-butyrolactone, DMAc, DMSO, dimethylurea, dimethyl imidazolidinone and acetonitrile; chlorinated solvents such as dichloromethane, chloroform, 1,2-dichloroethane, chlorobenzene, and dichlorobenzene; alcohols such as methanol, ethanol, propanol, iso-propyl alcohol, sec-butyl alcohol and tert-butyl alcohol; alkylene glycol monoalkyl ethers such as ethylene glycol monomethyl ether, ethylene glycol monoethyl ether, and propylene glycol monoethyl ether; ketones such as acetone, methyl ethyl ketone, cyclohexanone, and γ-butyl lactone; and ethers such as THF and 1,3-dioxane.

These solvents may be used individually or two or more of them may be used in combination. In particular, NMP is preferred in view of the viscosity of the composition to be obtained.

When a mixture of an aprotic polar solvent and other solvent is used as the organic solvent, the composition of the mixture is as follows: preferably 95 to 25% by weight, more preferably 90 to 25% by weight of the aprotic polar solvent; and preferably 5 to 75% by weight, more preferably 10 to 75% by weight of the other solvent (wherein the total is 100% by weight). When the content of the other solvent is within the range, the mixture is excellent in the effect to decreases the viscosity of the composition to be obtained. Preferred combination of the aprotic polar solvent and the other solvent in this case includes a combination of NMP as the aprotic polar solvent and methanol which has an effect to decrease the viscosity of the composition in a wide composition range as the other solvent.

The drying is preferably carried out by maintaining the temperature at 50 to 200°C for 0.1 to 10 hours.

The drying may be carried out in one step or may be carried out in two or more steps, that is, comprising preliminary drying before this drying. The drying may also carried out in an inert gas atmosphere such as nitrogen or under reduced pressure as required.

The electrolyte membrane of the present invention may be a monolayer membrane or a multilayer laminated membrane.

In case of laminated membrane, the thickness of each layer is arbitrary, and for example, one layer may be thick and the other layer may be thin. Each layer is also the same or different.

When the electrolyte membrane is produced, a porous substrate or a sheet-like fibrous material can be used to produce a reinforced electrolyte membrane.

Membrane-electrode assembly

The membrane-electrode assembly of the present invention is a membrane-electrode assembly wherein a gas diffusion layer, a catalyst layer, the electrolyte membrane of the present invention, a catalyst layer and a gas diffusion layer are laminated in this order. In particular, it is preferred that the membrane-electrode assembly is one wherein a catalyst layer for cathode electrode is provided on one side of the electrolyte membrane of the present invention and a catalyst layer for anode electrode is provided on the other side, and gas diffusion layers are provided on the cathode electrode side and the anode electrode side respectively contacting with the side of each catalyst layer for cathode electrode and for anode electrode oppositely to the electrolyte membrane.

The membrane-electrode assembly of the present invention comprises the electrolyte membrane of the present

invention, which enable to obtain the desired membrane-electrode assembly at low temperature and in short time even if a catalyst layer is provided on the electrolyte membrane by heat transfer in production of the membrane-electrode assembly, so that the catalyst layer is hardly damaged at that time and the membrane-electrode assembly is excellent in power generation capability, durability and the like.

As the gas diffusion layer and the catalyst layer, those well-known can be used without limitation.

Such a membrane-electrode assembly of the present invention can be produced by a known process. In particular, the membrane-electrode assembly may be produced by applying a composition constituting a catalyst layer on both sides of the electrolyte membrane of the present invention by a known process to form a catalyst layer and then providing a gas diffusion layer on the catalyst layer, or may be produced by preforming a catalyst layer on a substrate such as PET film, heat-transferring the catalyst layer onto both sides of the electrolyte membrane of the present invention and providing gas diffusion layers on the catalyst layers.

By using the electrolyte membrane of the present invention, a membrane-electrode assembly excelling in the desired characteristics can be obtained even if the temperature of heat transfer is low, and a membrane-electrode assembly in which separation of a catalyst layer in hot water (e.g., 70 to 100°C) hardly occurs can be obtained even if the catalyst layer is formed by application or by heat transfer.

Examples of the gas diffusion layer include a porous substrate, a laminated structure of a porous substrate and a fine porous layer, and the like. If the gas diffusion layer comprises a laminated structure of a porous substrate and a fine porous layer, the fine porous layer is preferred to contact with a catalyst layer. The gas diffusion layer is also preferred to comprise a fluorine-containing polymer in order to impart water repellency.

The catalyst layer is preferably constituted by catalyst, ion exchange resin and the like.

Examples of the catalyst include metal catalysts such as platinum, palladium, gold, ruthenium, iridium, cobalt and iron, and preferably used is noble metal catalysts such as platinum, palladium, gold, ruthenium and iridium. The metal catalyst may be one containing two or more elements such as alloy or mixture. As such a metal catalyst, in general, one supported on a high-specific surface area carbon particulate can be used.

The ion exchange resin is preferably a material which serves as a binder component binding the catalyst, as well as which effectively supplies ions generated by a reaction on the catalyst to an electrolyte membrane at anode, and effectively supplies ions supplied from the electrolyte membrane to the catalyst at cathode.

As the ion exchange resin, a polymer having a proton exchange group in order to improve the proton conductivity within the catalyst layer.

Examples of the proton exchange group contained in such a polymer include, but are not limited to, sulfonic group, carboxylic acid group, phosphoric acid group and the like.

As the ion exchange resin, a known ion exchange resin can be used without particular limitation, including Nafion. The polymer (1) may be used as an ion exchange resin, and furthermore, a polymer containing a fluorine atom, other polymers obtained from ethylene, styrene or the like, or a copolymer or blend thereof (these polymers or blend have a proton exchange group) may be used

The catalyst layer may further contain an additive such as carbon fiber or resin without ion exchange group, as required. The additive is preferably a component which has high water repellency, and includes, for example, fluorine-containing copolymer, silane coupling agent, silicone resin, wax, polyphosphazene and the like, and among these, preferably is fluorine-containing copolymer.

Polymer electrolyte fuel cell

The polymer electrolyte fuel cell of the present invention comprises the membrane-electrode assembly. Therefore, the polymer electrolyte hydrogen fuel cell according to the present invention, in particular, has suppressed flooding and is excellent in power generation capability, durability and the like.

The polymer electrolyte fuel cell according to the present invention is preferably, in particular, a polymer electrolyte fuel cell comprising: at least one membrane-electrode assembly and at least one electricity-generating member comprising separators located in both outer sides of its gas diffusion layer; a fuel-supplying member which supplies fuel to the electricity-generating member; and an oxidizing-agent-supplying member which supplies an oxidizing agent to the electricity-generating member.

As the separator, a separator used in an usual polymer electrolyte fuel cell may be used. In particular, carbon type separator, metal type separator or the like may be used.

As a member constituting the polymer electrolyte fuel cell, a known one can be used without particular limitation. The polymer electrolyte fuel cell of the present invention may be a single cell or a stack cell in which a plurality of single cells are connected in series. As the stacking method, a known method may be used. In particular, the method may be flat stacking in which single cells are arranged in plane, and may be bipolar stacking in which single cells are stacked via a separator in which a flow passage of fuel or an oxidizing agent is formed on the front and rear surfaces of the separator.

EXAMPLES

The present invention will now be described more concretely by way of Examples below, but the present invention is not limited at all to the following Examples.

Ion exchange capacity of polymers having sulfonic group

After sample films were prepared from the polymers obtained in the following Synthesis Examples, the films were immersed in deionized water to completely remove the remaining acids in the films, and then immersed in 2 mL of 2N brine per 1 mg of polymer for ion exchange to prepare aqueous hydrochloric acids. Neutralization titrations were performed for the aqueous hydrochloric acids using phenolphthalein as indicator and a 0.001 N standard aqueous solution of sodium hydroxide. The sample film after ion exchange were washed with deionized water and vacuum-dried at 110°C for 2 hours, then the dry weights of the film were measured. As shown in the following formula, from the titers of sodium hydroxide and the dry weights of the film, equivalents of sulfonic group (hereinafter referred to as "ion exchange capacity") were calculated.

Ion exchange capacity (meq/g) = Titer of sodium hydroxide (mmol) / Dry weight of film (g)

Measurement of number average molecular weight and weight average molecular weight

The polymer (oligomer) obtained in the following Synthesis Examples was dissolved in NMP buffer solution, and number average molecular weights (Mn) and weight average molecular weights (Mw) in terms of polystyrene were determined by GPC using NMP buffer solution as eluent, TOSOH HLC-8220 (produced by TOSOH Co.) as device and TSKgel α-M (produced by TOSOH Co.)as column.

NMP buffer solution was prepared at a ratio of NMP (3 L) / phosphoric acid (3.3 mL)/ lithium bromide (7.83 g).

Glass transition temperature

DSC: A temperature of the polymer (oligomer) obtained in the following synthesis example at which heat capacity changes under nitrogen atmosphere at a temperature rising rate of 20°C/min as measured by using differential calorimeter was defined as a glass transition temperature.

Methods for evaluation

The following evaluations were carried out using the electrolyte membrane obtained in the following Examples and Comparative Examples. The results are shown in Table 1.

Evaluation of water contact angle

The water contact angles of the electrolyte membranes obtained in the following Examples and Comparative Examples were evaluated using CA-X contact angle meter produced by Kyowa Interface Science Co., Ltd. By using a syringe, 0.7 mL of water was dropped onto a surface of the electrolyte membrane at a temperature of 23 ± 2°C and at relative humidity of 50 ± 5%, and the contact angle θ, an angle made by the droplet formed, was measured. The contact angle was measured at 10 points of both surfaces of the electrolyte membrane, and mean value was calculated.

TEM observation

The state of the electrolyte membrane obtained in the following Examples was observed by using a transmission electron microscopy. The observation was carried out by cutting out ultra-thin sections of the electrolyte membrane obtained in the Examples, staining the sections with lead nitrate, and then observing the sections using HF-100FA transmission electron microscopy (2D-TEM) produced by Hitachi, Ltd.

Evaluation of proton conductivity

Platinum wires (Φ = 0.5 mm) were pressed to a surface of a film sample obtained by cutting the electrolyte

membrane obtained in the following Examples and Comparative Examples into 5 mm width of rectangles, and kept in a thermo-hygrostat, and then the alternating-current impedance between platinum wires was measured to determine alternating-current resistance. In particular, the impedance in alternating current of 10 kHz was measured at 70°C at relative humidity of 30%. Chemical Impedance measurement system produced by NF Corporation Ltd. was used as resistance measurement device, and JW241 produced by Yamato Scientific Co. Ltd. was used as thermo-hygrostat. Five platinum wires were pressed at 5 mm intervals. Then, by changing the distance between the wires from 5 to 20 mm, the alternating-current resistance was measured. From the slope of the curve showing the relationship between the distance between the wires and the resistance, the specific resistance of the film sample was calculated according to the following formula. The reciprocal of the specific resistance corresponds to the proton conductivity.

Specific resistance R (Ω•cm) = 0.5 (cm) × film thickness (cm) × gradient in resistance vs. wire distance (Ω/cm)

Preparation of catalyst layer paste for anode electrode

Into a 200-mL poly bottle, 80 g of zirconia balls with a diameter of 5 mm ("YTZ Ball" produced by Nikkato Co., Inc.) was added, and then 1.28 g of platinum-ruthenium-carrying carbon particles ("TEC61E54" produced by TANAKA KIKINZOKU KOGYO Co., Inc., carrying 29.8% by mass Pt, and 23.2% by mass Ru), 3.60 g of distilled water, 12.02 g of n-propyl alcohol and 3.90 g of Nafion D2020 (produced by DuPont, 21% polymer concentration dispersion, ion exchange capacity: 1.08 meq/g) were added, and the mixture was stirred for 60 minutes with a paint shaker. Thereafter, by filtering through 100 mesh nylon mesh and removing the zirconia balls, a catalyst layer paste for anode electrode was obtained.

Preparation of catalyst layer paste for cathode electrode

Into a 200-mL poly bottle, 80 g of zirconia balls with a diameter of 5 mm (YTZ Ball) was added, and then 1.25 g of platinum-carrying carbon particles ("TEC10E50E" produced by TANAKA KIKINZOKU KOGYO Co., Inc., carrying 45.6% by mass Pt), 3.64 g of distilled water, 11.91 g of n-propyl alcohol and Nafion D2020 (4.40 g) were added, and the mixture was stirred for 60 minutes with a paint shaker. Thereafter, by filtering through 100 mesh nylon mesh and removing the zirconia balls, a catalyst layer paste for cathode electrode was obtained.

Preparation of electrode catalyst layer sheet

On a polytetrafluoroethylene (PTFE) sheet (produced by Nichias Co., Inc., trade name: Naflon Tape TOMB09001, thickness: 80 μm), a mask having a prescribed thickness and having a 5 cm x 5 cm opening was arranged, and the above obtained catalyst layer paste for anode electrode was applied by using a doctor blade, and then dried at 120 °C for 60 minutes to prepare an anode catalyst layer sheet having a coating amount of Pt catalyst of 0.50 mg/cm$^2$. Using the catalyst layer paste for cathode electrode, a cathode catalyst layer sheet having a coating amount of Pt catalyst of 0.50 mg/cm$^2$ was prepared by the similar method.

Evaluation of transferring property of a electrode catalyst layer

The electrolyte membrane obtained in Examples and Comparative Examples below, each of which has a thickness of 20 μm, was peeled from a PET film of substrate and cut into a prescribed size, and then the obtained electrolyte membrane was sandwiched between each of the previously prepared 5 cm x 5 cm electrode catalyst layer sheets for anode and cathode such that the catalyst layer sides of each of the electrode catalyst layer sheets face the electrolyte membrane, and hot pressed by a precision hot press machine to thermally transfer each of the electrode catalyst layers on the electrolyte membrane. Comparative investigation was carried out for the lowest necessary temperatures (joinable temperature) at which the transfer of both of the electrode catalyst layers was possible when the heating temperature was changed to 110°C, 120°C, 130°C, 140°C, 150°C, 160°C, 170°C or 180°C while keeping the pressure in hot press at 30 kg/cm$^2$ and keeping the pressing time at 5 minutes.

Evaluation of adherence of a electrode catalyst layer

The adherences of the electrolyte membranes obtained in Examples and Comparative Examples below with each of the electrode catalyst layers which were thermally transferred at the lowest necessary temperatures were compared and evaluated. A laminate in which the electrode catalyst layers were formed on both sides of the electrolyte membrane prepared in the same manner as described above was placed into a 1000-mL glass bottle, followed by addition of about 900 mL of deionized water, and then heated at 95°C for 24 hours by using a thermostatic oven (produced by As One Corporation, SONW-450). After the termination of the test, the laminate was removed from hot water and observed for the existence of the separation of each of the electrode catalyst layers (An: anode, Ca: cathode) by visual inspection.

The assessment criteria are as follows:

A: no separation occurs in all of the 5 cm x 5 cm transfer surface

B: separations are observed in a part (less than 2 $cm^2$) of the 5 cm x 5 cm transfer surface

C: separations are observed in 2 $cm^2$ to 25 $cm^2$ of the 5 cm x 5 cm transfer surface.

Gas diffusion layer

GDL24BC produced by SGL CARBON was used as gas diffusion layer.

Preparation of polymer electrolyte fuel cell

Each of the catalyst layers was thermally transferred to the electrolyte membrane at a lowest necessary temperature in the same manner as described above, then a PTFE sheet was peeled from the obtained laminate, and the obtained laminate was sandwiched between two gas diffusion layers and hot pressed at a pressure of 60 kg/$cm^2$ at 160°C for 20 minutes to prepare a membrane-electrode assembly. Separators doubling as a gas passage were laminated on the gas diffusion layers of the obtained membrane-electrode assembly and sandwiched by two titanium collectors, and then heaters were further arranged on the outer side to prepare a fuel cell for evaluation having an effective area of 25 $cm^2$.

Measurement of output voltage

By supplying air to the cathode electrode side of the obtained fuel cell for evaluation at a back pressure of 120 kPa and at an utilization rate of 40% and supplying pure hydrogen to the anode electrode side at a back pressure of 120 kPa and at an utilization rate of 70%, and keeping the cell temperature at 90°C, the relative humidity of the cathode electrode side at 30%, and the relative humidity of the anode electrode side at 30%, the cell voltage at a current density of 1.0 A/$cm^2$ was measured.

Synthesis Example 1

A 3-L three-necked flask provided with a stirrer and a cooling pipe was charged with chlorosulfonic acid (233.0 g, 2 mol), and then with 2,5-dichlorobenzophenone (100.4 g, 400 mmol), and the mixture was allowed to react for 8 hours in an oil bath at 100°C. After 8 hours, the reaction solution was slowly poured into broken ice (1000 g), and the resultant was extracted with ethyl acetate. The organic layer was washed with brine and then dried over magnesium sulfate, and then ethyl acetate was evaporated to give pale yellow crude crystals (3-(2,5-dichlorobenzoyl)benzenesulfonic acid chloride). The crude crystals were used in the next step without purification.

2,2-dimethyl-1- propanol (neopentyl alcohol) (38.8 g, 440 mmol) was added to 300 mL of pyridine, and the mixture was cooled to about 10°C. The crude crystals obtained above were slowly added to the mixture over about 30 minutes. After adding the total amount, the mixture was stirred for additional 30 minutes and allowed to react. After the reaction, the reaction solution was poured into 1000 mL of aqueous hydrochloric acid, and then precipitated solids were recovered. The obtained solids were dissolved in ethyl acetate, washed sequentially with aqueous sodium hydrogen carbonate solution and brine, and dried over magnesium sulfate, then ethyl acetate was evaporated to give crude crystals. The crude crystals were recrystallized from methanol to give 3-(2,5-dichlorobenzoyl)benzenesulfonic acid neopentyl as white crystals (compound represented by the following formula (10)), which is the desired product.

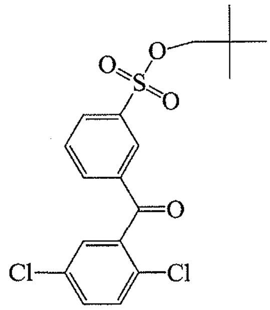

(10)

Synthesis Example 2

To a 1-L three-necked flask provided with a stirrer, a thermometer, a Dean-Stark pipe, a nitrogen introducing pipe and a cooling pipe, 48.8 g (284 mmol) of 2,6-dichlorobenzonitrile, 89.5 g (266 mmol) of 2,2-bis(4-hydroxyphenyl)-1,1,1,3,3,3-hexafluoropropane and 47.8 g (346 mmol) of potassium carbonate were weighed and added. The flask was subjected to nitrogen substitution, and then 346 mL of sulfolane and 173 mL of toluene were added to the flask, followed by stirring. Immersing the flask in an oil bath at 150°C, the reaction solution was heated to reflux at 150°C. Water being produced by the reaction was trapped by the Dean-Stark pipe. After 3 hours when the production of water became substantially no longer observed, toluene was removed through the Dean-Stark pipe to the outside of the reaction system. The reaction temperature was gradually raised to 200°C, and the reaction solution was stirred for 3 hours at the temperature, and then 9.2 g (53 mmol) of 2,6-dichlorobenzonitrile was added, and reacted for another 5 hours.

After allowing the reaction solution to cool, 100 mL of toluene was added for dilution. Inorganic salts insoluble in the reaction solution were removed by filtration, and the filtrate was poured into 2 L of methanol to precipitate a product. The precipitated product was filtered, dried and then dissolved in 250 mL of tetrahydrofuran, and the mixture was poured into 2 L of methanol for reprecipitation. The precipitated white powder was filtered and dried to obtain 109 g of the desired product. Mn of the product measured by GPC was 9,500.

It was confirmed that the obtained compound was an oligomer represented by the following formula (11).

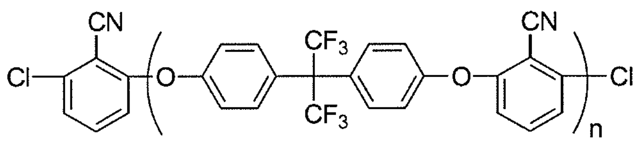

(11)

Synthesis Example 3

To a 1-L three-necked flask provided with a stirrer, a thermometer and a nitrogen introducing pipe, 135.2 g (337 mmol) of the compound obtained in Synthesis Example 1, 48.7 g (5.1 mmol) of the oligomer obtained in Synthesis Example 2, 6.71 g (10.3 mmol) of bis(triphenyl phosphine)nickel dichloride, 1.54 g (10.3 mmol) of sodium iodide, 35.9 g (137 mmol) of triphenylphosphine and 53.7 g (821 mmol) of zinc were weighed and added, and then the flask was subjected to dry nitrogen substitution

The flask was charged with 430 mL of N,N-dimethylacetamide (DMAc) and the mixture was continued to stir for 3 hours while maintaining the reaction temperature at 80°C, then 730 mL of DMAc was added for dilution, and insoluble matters were removed by filtration.

The filtrate is added to a 2-L three-necked flask provided with a stirrer, a thermometer and a nitrogen introducing pipe, then heated at 115°C under stirring, and 44 g (506 mmol) of lithium bromide was added. After stirring the mixture for 7 hours, the obtained solution was poured into 5 L of acetone to precipitate a product. Next, the precipitate was washed with aqueous 1N hydrochloric acid solution, then washed with pure water and dried to obtain 122 g of the desired polymer. Mn of the obtained polymer was 54,000, and Mw was 135,000. The obtained polymer is presumed to be a polymer having sulfonic group represented by the following formula (12). The ion exchange capacity of this polymer was 2.3 meq/g, and Tg was 190°C.

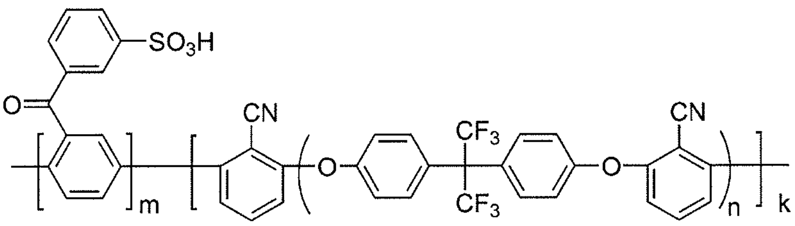

(1 2)

(wherein "m" and "k" are the values calculated from the fed amounts of raw materials which form the structural unit)

Synthesis Example 4

3,5-dichlorobenzene sulfonyl chloride (114.65 g, 467 mmol) was added in small portions to a solution of neopentyl alcohol (45.30 g, 514 mmol) in pyridine (300 mL) for 15 minutes with stirring. During this period, the reaction temperature was kept at 18 to 20 °C. The reaction mixture was stirred for 30 minutes while being cooled, and then ice-cooled 10 wt% of aqueous HCL solution (1600 mL) was added. Water-insoluble components were extracted with 700 mL of ethyl acetate, and washed with aqueous 1 N HCl solution two times (each in an amount of 700 mL), followed by with aqueous 5 wt% $NaHCO_3$ solution two times (each in an amount of 700 mL), and then dried over $MgSO_4$. The solvent was removed by using a rotary dryer, and the residue was recrystallized from 500 mL of methanol. As a result, 3,5-dichlorobenzenesulfonic acid neopentyl represented by the following formula (13) was obtained as lustrous colorless crystals (with a purity of over 99% by $^1$H-NMR) in a yield of 105.98 g (76%).

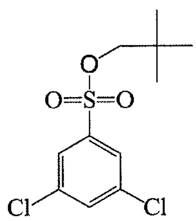

(1 3)

Synthesis Example 5

To a 1-L three-necked flask provided with a stirrer, a thermometer, a Dean-Stark pipe, a nitrogen introducing pipe and a cooling pipe, 90.1 g (0.52 mol) of 2,6-dichlorobenzonitrile, 26.6 g (0.12 mol) of 2,5-di-tert-butylhydroquinone, 59.4 g (0.36 mol) of 2-tert-butylhydroquinone and 85.6 g (0.62 mol) of potassium carbonate were weighed and added. The flask was subjected to nitrogen substitution, and then 600 mL of sulfolane and 300 mL of toluene were added to the flask, followed by stirring. Immersing the flask in an oil bath at 150°C, the reaction solution was heated to reflux at 150°C. Water being produced by the reaction was trapped by the Dean-Stark pipe. After 3 hours when the production of water became substantially no longer observed, toluene was removed through the Dean-Stark pipe to the outside of the reaction system. The reaction temperature was gradually raised to 180 to 190°C, and the reaction solution was stirred for 3 hours at the temperature, and then 24.6 g (0.14 mol) of 2,6-dichlorobenzonitrile was added, and allowed to react for another 5 hours.

The reaction solution was allowed to cool, then added into 2401 mL of methanol/4 wt% sulfuric acid aqueous solution (5/1 in volume ratio) to obtain a precipitate. The precipitated product was filtered, and then the residue was added into 2401 mL of water and stirred at 55°C for 1 hour. The solution after being stirred was filtered, followed by again adding the residue into 2401 mL of water, and then the mixture was stirred at 55°C for 1 hour and filtered. Next, the residue was poured into 2401 mL of methanol, stirred at 55°C for 1 hour and filtered, and then the residue was again poured into 2401 mL of methanol, stirred at 55°C for 1 hour and filtered. The residue was dried in the air, and then dried in vacuum at 80°C to obtain 125 g (Yield: 90%) of the desired product. Mn of the product measured by GPC was 7,000. It was confirmed that the obtained compound was an oligomer represented by the formula (14).

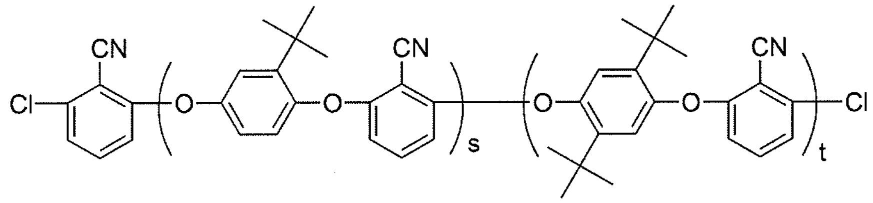

(1 4)

(wherein "s" and "t" are the values calculated from the fed amounts of raw materials which form the structural unit)

Synthesis Example 6

Into a mixture of 28.73 g (96.7 mmol) of the compound obtained in Synthesis Example 4, 23.29 g (3.33 mmol) of the oligomer obtained in Synthesis Example 5, 2.62 g (4.0 mmol) of bis(triphenyl phosphine)nickel dichloride, 3.15 g (12.0 mmol) of triphenylphosphine and 15.69 g (240 mmol) of zinc, 166 mL of dried DMAc was added under nitrogen.

The obtained mixture was heated under stirring (eventually heated to 79°C) and allowed to react for 3 hours. In the course of the reaction, increase of the viscosity in the system was observed. The solution after the reaction was diluted with 200 mL of DMAc, then stirred for 30 minutes and filtered using Celite as filter aid.

To the filtrate, 37.78 g (435 mmol) of lithium bromide was added, and the mixture was allowed to react at the inner temperature of 120°C for 7 hours under nitrogen atmosphere. After the reaction, the reaction solution was cooled to room temperature and poured into 5.0 L of water to obtain a coagulum. The coagulum was immersed in acetone, then filtered and washed. The washed matter was added to 6500 g of aqueous 1N sulfuric acid solution, and then washed under stirring. The solution after being washed was filtered, and then the residue was washed with ion exchanged water until pH of the solution after washing reached to 5 or more. The washed solid was dried using a hot-air dryer at 80°C to obtain 36.0 g (yield: 94.0%) of the desired polymer. Mw of the obtained polymer was measured by GPC to be 112,000, and the ion exchange capacity was 2.38 meq/g, and Tg was 210°C. The obtained polymer was a polymer comprising a structure represented by the following formula (15).

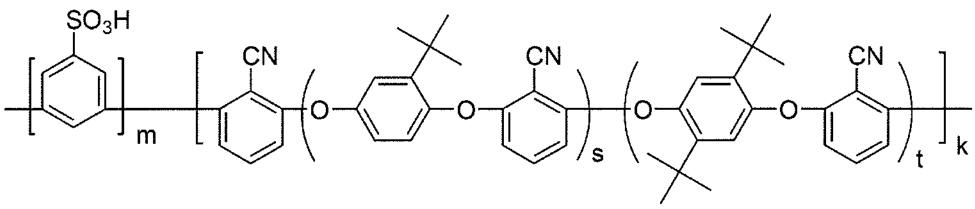

(1 5)

(wherein "m" and "k" are the values calculated from the fed amounts of raw materials which form the structural unit)

Synthesis Example 7

To a mixture of 22.54 g (75.83 mmol) of the compound obtained in Synthesis Example 4 and 1.19 g (4.55 mmol) of triphenylphosphine, 55 mL of dehydrated DMAc was added under nitrogen to prepare an addition solution 1.

To a mixture of 18.07 g (71.95 mmol) of 2,5-dichlorobenzophenone, 0.83 g (2.23 mmol) of 2,6-dichlorobenzonitrile, 1.46 g (5.56 mmol) of triphenylphosphine and 11.64 g (178.02 mmol) of zinc, 53 mL of dehydrated DMAc was added under nitrogen. After heating the reaction system to 60°C under stirring, 1.23 g (1.88 mmol) of bis(triphenyl phosphine)nickel dichloride was added for starting polymerization and stirred at 80°C for 20 minutes. As the reaction proceeded, exothermic heat and viscosity increase were observed.

In order to measure the molecular weight of the obtained oligomer, a small amount of the reaction system solution was sampled. Mn of the oligomer based on polystyrene as measured by GPC was 5500.

After adding the addition solution 1 to the obtained reaction system under nitrogen and heating the mixture to 60°C under stirring, 8.78 g (134.4 mmol) of zinc and 1.47 g (2.24 mmol) of bis(triphenyl phosphine)nickel dichloride were added for further promoting polymerization, and stirred at 80°C for 3 hours. As the reaction proceeded, exothermic heat and viscosity increase were observed.

The obtained solution was diluted in 498 mL of DMAc, and filtered using Celite as filter aid. To the filtrate, 25.93 g (298.56 mmol) of lithium bromide was added, and the mixture was allowed to react at 100°C for 7 hours. After the reaction, the reaction solution was cooled to room temperature, then poured into 3.3 L of water to obtain a solution containing a coagulum. The coagulated product was added to acetone, then the mixture was washed 4 times with stirring and filtrated. The residue was added to aqueous 1 N sulfuric acid solution, and the mixture was washed with stirring,

followed by filtration. The washing and filtration were repeated 7 times. The residue after 7 times filtration was further washed with deionized water until the pH of the solution after washing becomes 5 or more, and then filtrated. The obtained residue was dried at 75°C for 24 hours to give brown polymer powder.

The obtained polymer is deduced to have a structure represented by the following formula (16) (q1:q2 = 97:3). The molecular weight of the polymer having a sulfonic group based on polystyrene as measured by GPC was 51000 for Mn and 114000 for Mw. The ion exchange capacity of the polymer was 2.24 meq/g, and Tg was 170°C.

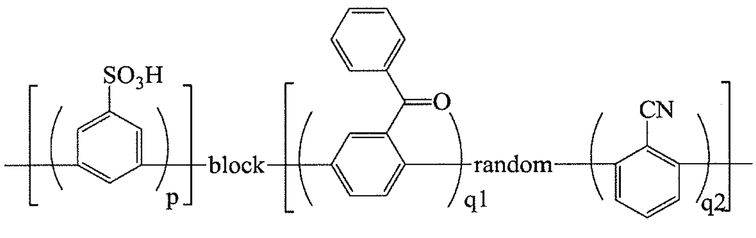

(16)

(wherein "p" is the value calculated from the fed amounts of raw materials which form the structural unit)

Synthesis Example 8

A 3-L separable four-necked flask provided with a stirring blade, a thermometer, a nitrogen introducing pipe, a Dean-Stark pipe and a cooling pipe was charged with 92.8 g (265 mmol) of 9,9-bis(4-hydroxyphenyl)fluorene, 87.4 g (794 mmol) of resorcinol, 205.4 g (941 mmol) of 4,4'-difluorobenzophenone, 52.5 g (224 mmol) of 4-chloro-4'-fluorobenzophenone and 175.6 g (1271 mmol) of potassium carbonate. Next, 1250 mL of DMAc and 500 mL of toluene were added. Then, the mixture was heated to 155°C, and then water being produced by the reaction was removed through the Dean-Stark pipe by azeotropic distillation with toluene. After allowing to react for 3 hours until the production of water became no longer observed, the reaction solution was heated to 165°C while removing toluene to the outside of the reaction system and then stirred at 160 to 165°C for 5 hours. Next, 30.4 g (129 mmol) of 4-chloro-4'-fluorobenzophenone was added, and the mixture was again stirred at 160 to 165°C for 3 hours.

The reaction solution was poured in small portions into 5.0 L of methanol to coagulate the reaction product, followed by stirring for 1 hour. The precipitate obtained by filtration of the coagulated liquid was washed with a small amount of methanol. An operation of adding 5.0 L of methanol to the obtained precipitate and washing it with stirring was repeated 3 times. The obtained product was dried to give 347 g (yield: 88%) of the desired product (compound represented by the following formula (17)).

Mn of the obtained desired product based on polystyrene measured by GPC was 4100, and Mw was 6600.

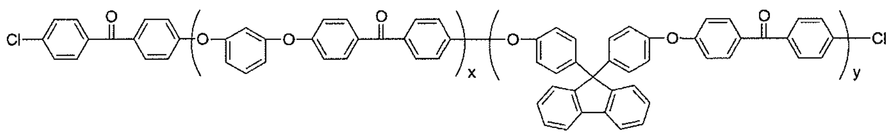

(17)

(wherein "x" and "y" are the values calculated from the fed amounts of raw materials which form the structural unit)

Synthesis Example 9

Into a 1-L three-necked flask provided with a stirrer, a thermometer, a Dean-Stark pipe, a nitrogen introducing pipe and a cooling pipe, 143.1 g (832 mmol) of 2,6-dichlorobenzonitrile, 266.1 g (768 mmol) of 4,4'-(1,3-phenylene diisopropylidene)bisphenol and 127.4 g (922 mmol) of potassium carbonate were weighed and added. The flask was subjected to nitrogen substitution, and then 960 mL of sulfolane and 480 mL of toluene were added to the flask, followed by stirring. Immersing the flask in an oil bath at 150°C, the reaction solution was heated to reflux at 150°C. Water being produced by the reaction was trapped by the Dean-Stark pipe. After 3 hours when the production of water became substantially no longer observed, toluene was removed through the Dean-Stark pipe to the outside of the reaction system. The reaction temperature was gradually raised to 180°C, and the reaction solution was stirred for 3 hours at the temperature, and then 33.0 g (192 mmol) of 2,6-dichlorobenzonitrile was added, and reacted for another 5 hours.

The reaction solution was allowed to cool, then added into 3800 mL of methanol/4 wt% sulfuric acid aqueous solution (5/1 in volume ratio) to obtain a precipitate. The precipitated product was filtered, and then the residue was added into 2400 mL of water and stirred at 55°C for 1 hour. The solution after being stirred was filtered, followed by

again adding the residue into 3400 mL of water, and then the mixture was stirred at 55°C for 1 hour and filtered. Next, the residue was poured into 3400 mL of methanol, stirred at 55°C for 1 hour and filtered, and then the residue was again poured into 3400 mL of methanol, stirred at 55°C for 1 hour and filtered. The residue was dried in the air, and then dried in vacuum at 80°C to obtain 318 g (Yield: 90%) of the desired product.

Mn of the obtained desired product measured by GPC was 6,400. It was confirmed that the obtained compound was an oligomer represented by the following formula (18).

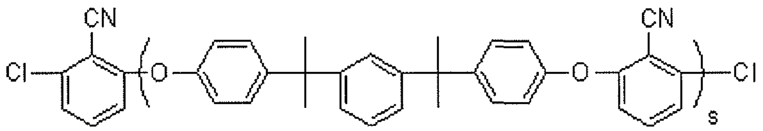

(1 8)

Synthesis Example 10

To a 1-L three-necked flask provided with a stirrer, a thermometer, a Dean-Stark pipe, a nitrogen introducing pipe and a cooling pipe, 149.3 g (0.52 mol) of bis(4-chlorophenyl)sulfone, 120.1 g (0.48 mol) of bis(4-hydroxyphenyl)sulfone and 85.6 g (0.62 mol) of potassium carbonate were weighed and added. The flask was subjected to nitrogen substitution, and then 700 mL of sulfolane and 350 mL of toluene were added to the flask, followed by stirring. Immersing the flask in an oil bath at 150°C, the reaction solution was heated to reflux at 150°C. Water being produced by the reaction was trapped by the Dean-Stark pipe. After 3 hours when the production of water became substantially no longer observed, toluene was removed through the Dean-Stark pipe to the outside of the reaction system. The reaction temperature was gradually raised to 180 to 190°C, and the reaction solution was stirred for 3 hours, and then 40.2 g (0.14 mol) of bis(4-chlorophenyl)sulfone was added, and allowed to react for another 5 hours.

The reaction solution was allowed to cool, then added into 2400 mL of methanol/4 wt% sulfuric acid aqueous solution (5/1 in volume ratio) to obtain a precipitate. The precipitated product was filtered, and then the residue was added into 2400 mL of water and stirred at 55°C for 1 hour. The solution after being stirred was filtered, followed by again adding the residue into 2400 mL of water, and then the mixture was stirred at 55°C for 1 hour and filtered. Next, the residue was poured into 2401 mL of methanol, stirred at 55°C for 1 hour and filtered, and then the residue was again poured into 2400 mL of methanol, stirred at 55°C for 1 hour and filtered. The residue was dried in the air, and then dried in vacuum at 80°C to obtain 187.6 g (Yield: 80%) of the desired product.

Mn of the obtained desired product measured by GPC was 8,500. It was confirmed that the obtained compound was an oligomer represented by the following formula (19).

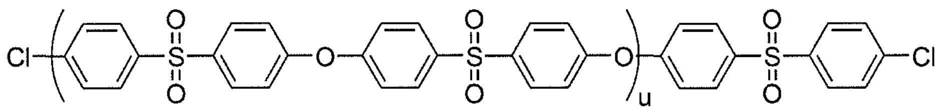

(1 9)

Synthesis Example 11

To A mixture of 28.40 g (96.2 mmol) of the compound obtained in Synthesis Example 4, 24.07 g (3.76 mmol) of oligomer obtained in Synthesis Example 9, 2.62 g (4.0 mmol) of bis(triphenyl phosphine)nickel dichloride, 2.10 g (8.0 mmol) of triphenylphosphine and 15.69 g (240 mmol) of zinc, 168 mL of dried DMAc was added under nitrogen.

The reaction system was heated under stirring (eventually heated to 79°C) and allowed to react for 3 hours. In the course of the reaction, increase of the viscosity in the system was observed. The solution after the reaction was diluted with 200 mL of DMAc, stirred for 30 minutes and then filtered using Celite as filter aid.

To the filtrate, 33.43 g (385 mmol) of lithium bromide was added, and the mixture was allowed to react at the inner temperature of 120°C for 7 hours under nitrogen atmosphere. After the reaction, the reaction solution was cooled to room temperature and poured into 5.0 L of water to obtain a coagulum. The coagulum was immersed in acetone, then filtered and washed. The washed matter was added to 6500 g of aqueous 1N sulfuric acid solution, and then washed under stirring. The solution after being washed was filtered, and then the residue was washed with ion exchanged water until pH of the solution after washing reached to 5 or more. The washed solid was dried using a hot-air dryer at 80°C to obtain 36.5 g (yield: 94.0%) of the desired polymer. Mn of the obtained polymer measured by GPC was 47,300; Mw was 123,000; the ion exchange capacity was 2.33 meq/g; and Tg was 160°C. The obtained polymer was a polymer comprising a structure represented by the following formula (20).

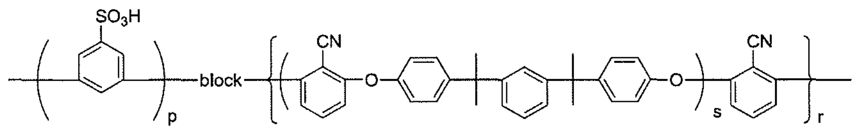

(20)

(wherein "p" and "r" are the values calculated from the fed amounts of raw materials which form the structural unit)

Synthesis Example 12

To a mixture of 16.42 g (55.26 mmol) of the compound obtained in Synthesis Example 4, 5.33 g (0.83 mmol) of the oligomer obtained in Synthesis Example 9 and 0.88 g (3.37 mmol) of triphenylphosphine, 53 mL of dehydrated DMAc was added under nitrogen to prepare an addition solution 2.

To a mixture of 11.03 g (43.91 mmol) of 2,5-dichlorobenzophenone, 0.86 g (3.29 mmol) of triphenylphosphine and 6.89 g (105.4 mmol) of zinc, 32 mL of dehydrated DMAc was added under nitrogen. After heating the reaction system to 60°C under stirring, 0.72 g (1.10 mmol) of bis(triphenyl phosphine)nickel dichloride was added for starting polymerization and stirred at 80°C for 20 minutes. As the reaction proceeded, exothermic heat and viscosity increase were observed.

In order to measure the molecular weight of the obtained oligomer, a small amount of the reaction system solution was sampled. Mn of the oligomer based on polystyrene as measured by GPC was 7000.

After adding the addition solution 2 to the obtained reaction system under nitrogen and heating the mixture to 60°C under stirring, 6.60 g (101.0 mmol) of zinc and 1.10 g (1.68 mmol) of bis(triphenyl phosphine)nickel dichloride were added for further promoting polymerization, and stirred at 80°C for 3 hours. As the reaction proceeded, exothermic heat and viscosity increase were observed.

The obtained solution was diluted in 320 mL of DMAc, and filtered using Celite as filter aid. To the filtrate, 19.20 g (221.04 mmol) of lithium bromide was added, and the mixture was allowed to react at 100°C for 7 hours. After the reaction, the reaction solution was cooled to room temperature, then poured into 2.4 L of water to obtain a solution containing a coagulum. The coagulated product was added to acetone, then the mixture was washed with stirring and then filtrated. The washing and filtration were repeated 4 times. The residue after being filtered 4 times was added to aqueous 1 N sulfuric acid solution, and the mixture was washed with stirring, followed by filtration. The washing and filtration were repeated 7 times. The residue after 7 times filtration was further washed with deionized water until the pH of the solution after washing becomes 5 or more, and then filtrated. The obtained residue was dried at 75°C for 24 hours to give brown polymer powder.

The obtained polymer is deduced to have a structure represented by the following formula (21) (q:r = 98.14:1.86). Mn of the polymer having a sulfonic group based on polystyrene as measured by GPC was 71,000 and Mw was 160,000. The ion exchange capacity of the polymer was 2.35 meq/g, and Tg was 150°C.

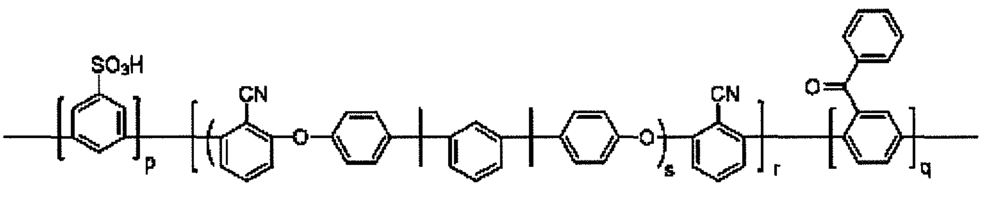

(21)

(wherein "p", "q" and "r" are the values calculated from the fed amounts of raw materials which form the structural unit)

Example 1

A PET film was cast-coated by die coater with a solution of 8.55 g of the polymer obtained in Synthesis Example 3 and 0.45 g of the polymer obtained in Synthesis Example 9 dissolved in 51 g of a mixed solvent of methanol/NMP (40/60 in mass ratio), and was preliminarily dried at 80°C for 5 minutes, and then dried at 160°C for 20 minutes. After drying, the coated PET film was immersed overnight in a large amount of distilled water so that the remaining NMP in the coating was removed, and then the film was dried in the air to obtain a PET film with electrolyte membrane comprising the polymer obtained in Synthesis Example 3 and the polymer obtained in Synthesis Example 9 in a mass ratio of 95/5 and having an electrolyte membrane thickness of 20 μm.

Example 2

Film formation was carried out as in Example 1 except that a solution of 8.55 g of the polymer obtained in Synthesis Example 3 and 0.45 g of fluorine polymer (polyvinylidene fluoride; model number 301F, produced by Elf Atochem) dissolved in 51 g of a mixed solvent of methanol/NMP (40/60 in mass ratio) was used to obtain a PET film with electrolyte membrane comprising the polymer obtained in Synthesis Example 3 and the fluorine polymer in a mass ratio of 95/5 and having an electrolyte membrane thickness of 20 μm.

Comparative example 1

Film formation was carried out as in Example 1 except that a solution of 9.00 g of the polymer obtained in Synthesis Example 3 dissolved in 51 g of a mixed solvent of methanol/NMP (40/60 in mass ratio) was used to obtain a PET film with electrolyte membrane consisting of the polymer obtained in Synthesis Example 3 and having a thickness of 20 μm.

Comparative example 2

Film formation was carried out as in Example 1 except that a solution of 8.55 g of the polymer obtained in Synthesis Example 3 and 0.45 g of the polymer obtained in Synthesis Example 2 dissolved in 51 g of a mixed solvent of methanol/NMP (40/60 in mass ratio) was used to obtain a PET film with electrolyte membrane comprising the polymer obtained in Synthesis Example 3 and the polymer obtained in Synthesis Example 2 in a mass ratio of 95/5 and having an electrolyte membrane thickness of 20 μm.

Example 3

Film formation was carried out as in Example 1 except that a solution of 8.55 g of the polymer obtained in Synthesis Example 6 and 0.45 g of the polymer obtained in Synthesis Example 9 dissolved in 51 g of a mixed solvent of methanol/NMP (40/60 in mass ratio) was used to obtain a PET film with electrolyte membrane comprising the polymer obtained in Synthesis Example 6 and the polymer obtained in Synthesis Example 9 in a mass ratio of 95/5 and having an electrolyte membrane thickness of 20 μm.

Comparative example 3

Film formation was carried out as in Example 1 except that a solution of 9.00 g of the polymer obtained in Synthesis Example 6 dissolved in 51 g of a mixed solvent of methanol/NMP (40/60 in mass ratio) was used to obtain a PET film with electrolyte membrane consisting of the polymer obtained in Synthesis Example 6 and having an electrolyte membrane thickness of 20 μm.

Example 4

To 42.9 g of a commercially available Nafion D2020 (produced by Du Pont Co., Ltd., a dispersion liquid having a polymer concentration of 21%; ion exchange capacity: 1.08 meq/g), 30 g of NMP was added, and then water and 1-propanol were evaporated, thereby replacing the solvent to obtain a solution of Nafion in NMP. To the solution, 40 g of methanol and 30 g of NMP were added to obtain a Nafion solution comprising a mixed solvent of methanol/NMP (40/60 in mass ratio). Next, 0.47 g of the polymer obtained in Synthesis Example 9 was added to the Nafion solution, and the mixture was stirred to dissolve the polymer. Film formation was carried out as in Example 1 except that the obtained solution was used to obtain a PET film with electrolyte membrane comprising Nafion and the polymer obtained in Synthesis Example 9 in a mass ratio of 95/5 and having an electrolyte membrane thickness of 20 μm.

Example 5

Film formation was carried out as in Example 1 except that a solution of 8.55 g of the polymer obtained in Synthesis Example 7 and 0.45 g of the polymer obtained in Synthesis Example 8 dissolved in 51 g of a mixed solvent of methanol/NMP (40/60 in mass ratio) was used to obtain a PET film with electrolyte membrane comprising the polymer obtained in Synthesis Example 7 and the polymer obtained in Synthesis Example 8 in a mass ratio of 95/5 and having an electrolyte membrane thickness of 20 μm.

Example 6

Film formation was carried out as in Example 1 except that a solution of 8.55 g of the polymer obtained in Synthesis Example 7 and 0.45 g of the polymer obtained in Synthesis Example 9 dissolved in 51 g of a mixed solvent of methanol/NMP (40/60 in mass ratio) was used to obtain a PET film with electrolyte membrane comprising the polymer obtained in Synthesis Example 7 and the polymer obtained in Synthesis Example 9 in a mass ratio of 95/5 and having an electrolyte membrane thickness of 20 μm.

Fig. 1 shows a transmission electron microscope (TEM) photograph of the cross section of the obtained electrolyte membrane. In this picture, black and white portions appearing in background show the polymer obtained in Synthesis Example 7 (polymer (1)) and white independent large mass portions show the polymer obtained in Synthesis Example 9 (polymer (2)). As is apparent from the picture, it was confirmed that the polymer obtained in Synthesis Example 9 was dispersed in the polymer obtained in Synthesis Example 7 while the polymer obtained in Synthesis Example 7 and the polymer obtained in Synthesis Example 9 were incompatible. It is thought that results of other examples will be like this.

Example 7

Film formation was carried out as in Example 1 except that a solution of 8.55 g of the polymer obtained in Synthesis Example 7 and 0.45 g of the polymer obtained in Synthesis Example 2 dissolved in 51 g of a mixed solvent of methanol/NMP (40/60 in mass ratio) was used to obtain a PET film with electrolyte membrane comprising the polymer obtained in Synthesis Example 7 and the polymer obtained in Synthesis Example 2 in a mass ratio of 95/5 and having an electrolyte membrane thickness of 20 μm.

Example 8

Film formation was carried out as in Example 1 except that a solution of 8.55 g of the polymer obtained in Synthesis Example 7 and 0.45 g of the polymer obtained in Synthesis Example 5 dissolved in 51 g of a mixed solvent of methanol/NMP (40/60 in mass ratio) was used to obtain a PET film with electrolyte membrane comprising the polymer obtained in Synthesis Example 7 and the polymer obtained in Synthesis Example 5 in a mass ratio of 95/5 and having an electrolyte membrane thickness of 20 μm.

Example 9

Film formation was carried out as in Example 1 except that a solution of 8.55 g of the polymer obtained in Synthesis Example 7 and 0.45 g of the polymer obtained in Synthesis Example 10 dissolved in 51 g of a mixed solvent of methanol/NMP (40/60 in mass ratio) was used to obtain a PET film with electrolyte membrane comprising the polymer obtained in Synthesis Example 7 and the polymer obtained in Synthesis Example 10 in a mass ratio of 95/5 and having an electrolyte membrane thickness of 20 μm.

Example 10

Film formation was carried out as in Example 1 except that a solution of 8.55 g of the polymer obtained in Synthesis Example 7 and 0.45 g of fluorine polymer (polyvinylidene fluoride; model number 301F, produced by Elf Atochem) dissolved in 51 g of a mixed solvent of methanol/NMP (40/60 in mass ratio) was used to obtain a PET film with electrolyte membrane comprising the polymer obtained in Synthesis Example 7 and the fluorine polymer in a mass ratio of 95/5 and having an electrolyte membrane thickness of 20 μm.

Comparative example 4

Film formation was carried out as in Example 1 except that a solution of 9.00 g of the polymer obtained in Synthesis Example 7 dissolved in 51 g of a mixed solvent of methanol/NMP (40/60 in mass ratio) was used to obtain a PET film with electrolyte membrane consisting of the polymer obtained in Synthesis Example 7 and having an electrolyte membrane thickness of 20 μm.

Example 11

Film formation was carried out as in Example 1 except that a solution of 8.55 g of the polymer obtained in Synthesis Example 11 and 0.45 g of the polymer obtained in Synthesis Example 8 dissolved in 51 g of a mixed solvent

of methanol/NMP (40/60 in mass ratio) was used to obtain a PET film with electrolyte membrane comprising the polymer obtained in Synthesis Example 11 and the polymer obtained in Synthesis Example 8 in a mass ratio of 95/5 and having an electrolyte membrane thickness of 20 μm.

Comparative example 5

Film formation was carried out as in Example 1 except that a solution of 9.00 g of the polymer obtained in Synthesis Example 11 dissolved in 51 g of a mixed solvent of methanol/NMP (40/60 in mass ratio) was used to obtain a PET film with electrolyte membrane consisting of the polymer obtained in Synthesis Example 11 and having an electrolyte membrane thickness of 20 μm.

Example 12

Film formation was carried out as in Example 1 except that a solution of 8.55 g of the polymer obtained in Synthesis Example 12 and 0.45 g of the polymer obtained in Synthesis Example 8 dissolved in 51 g of a mixed solvent of methanol/NMP (40/60 in mass ratio) was used to obtain a PET film with electrolyte membrane comprising the polymer obtained in Synthesis Example 12 and the polymer obtained in Synthesis Example 8 in a mass ratio of 95/5 and having an electrolyte membrane thickness of 20 μm.

Comparative example 6

Film formation was carried out as in Example 1 except that a solution of 9.00 g of the polymer obtained in Synthesis Example 12 dissolved in 51 g of a mixed solvent of methanol/NMP (40/60 in mass ratio) was used to obtain a PET film with electrolyte membrane consisting of the polymer obtained in Synthesis Example 12 and having an electrolyte membrane thickness of 20 μm.

Taable 1

| | Polymer (1) | Polymer (2) | Tg (°C) of polymer (2) | Contact angle (°) | Joinable temperature (°C) | Adherence (An/Ca) | Specific resistance (Ω•cm) | cell voltage (V) |
|---|---|---|---|---|---|---|---|---|
| Example 1 | Synthesis Example 3 | Synthesis Example 9 | 130 | 93 | 140 | A/A | 242 | 0.33 |
| Example 2 | Synthesis Example 3 | fluorine polymer | 35 | 98 | 130 | A/A | 240 | 0.32 |
| Comparative Example 1 | Synthesis Example 3 | N/A | - | 90 | 160 | A/B | 232 | 0.30 |
| Comparative Example 2 | Synthesis Example 3 | Synthesis Example 2 | 180 | 90 | 160 | A/B | 236 | 0.29 |
| Example 3 | Synthesis Example 6 | Synthesis Example 9 | 130 | 92 | 150 | A/A | 74 | 0.42 |
| Comparative Example 3 | Synthesis Example 6 | N/A | - | 83 | 180 | B/B | 72 | 0.38 |
| Example 4 | Nafion | Synthesis Example 9 | 130 | 99 | 110 | A/A | 72 | 0.42 |
| Example 5 | Synthesis Example 7 | Synthesis Example 8 | 130 | 91 | 150 | A/A | 54 | 0.45 |
| Example 6 | Synthesis Example 7 | Synthesis Example 9 | 130 | 92 | 150 | A/A | 54 | 0.46 |
| Example 7 | Synthesis Example 7 | Synthesis Example 2 | 180 | 90 | 160 | A/A | 54 | 0.45 |
| Example 8 | Synthesis Example 7 | Synthesis Example 5 | 210 | 89 | 170 | A/A | 54 | 0.44 |
| Example 9 | Synthesis Example 7 | Synthesis Example 10 | 215 | 88 | 170 | A/B | 55 | 0.44 |
| Example 10 | Synthesis Example 7 | fluorine polymer | 35 | 98 | 150 | A/A | 54 | 0.45 |
| Comparative Example 4 | Synthesis Example 7 | N/A | - | 41 | 180 | C/C | 53 | 0.40 |

(continued)

| | Polymer (1) | Polymer (2) | Tg (°C) of polymer (2) | Contact angle (°) | Joinable temperature (°C) | Adherence (An/Ca) | Specific resistance (Ω•cm) | cell voltage (V) |
|---|---|---|---|---|---|---|---|---|
| Example 11 | Synthesis Example 11 | Synthesis Example 8 | 130 | 92 | 140 | A/A | 78 | 0.40 |
| Comparative Example 5 | Synthesis Example 11 | N/A | - | 80 | 150 | A/B | 76 | 0.37 |
| Example 12 | Synthesis Example 12 | Synthesis Example 8 | 130 | 96 | 140 | A/A | 66 | 0.43 |
| Comparative Example 6 | Synthesis Example 12 | N/A | - | 52 | 160 | A/B | 60 | 0.39 |

From the results in Table 1, it can be seen that addition of the polymer (2) can lower the bonding-available temperature and increase the adherence.

It was also revealed that addition of the polymer (2) does not deteriorate the specific resistance and, due to increase in adherence, increases the proton conductivity between electrode and membrane interface, resulting in increased power generation capability.

Comparing Example 1 and Example 2 with Comparative example 2, it was revealed that sufficient effects can not be obtained when the polymer (1) and the polymer (2) which does not have a hydrophobic structural unit differing from the hydrophobic structural unit of the polymer (1) are used.

## Claims

1. An electrolyte membrane comprising a polymer (1) comprising a hydrophobic structural unit and a structural unit having a proton-conducting group and a polymer (2) comprising a hydrophobic structural unit having no sulfonic group which is different from the hydrophobic structural unit of the polymer (1).

2. The electrolyte membrane according to claim 1, wherein the polymer (2) is an aromatic polyether polymer or a fluorine-containing polymer.

3. The electrolyte membrane according to claim 1 or 2, wherein the content of the polymer (1) is 50 to 99.9% by weight when the sum of the contents of the polymer (1) and the polymer (2) is 100% by weight.

4. The electrolyte membrane according to any one of claims 1 to 3, wherein the number average molecular weight of the polymer (2) is 1000 to 60000.

5. The electrolyte membrane according to any one of claims 1 to 4, wherein the glass transition temperature (Tg) by differential scanning calorimetry (DSC, temperature rising rate: 20°C/min) of the polymer (2) is not higher than 220°C.

6. The electrolyte membrane according to any one of claims 1 to 5, wherein the water contact angle is 50 to 120 degree.

7. The electrolyte membrane according to any one of claims 1 to 6, wherein the polymer (2) is not compatible with the polymer (1).

8. The electrolyte membrane according to any one of claims 1 to 7, wherein the polymer (2) is an aromatic polyether polymer comprising a structural unit represented by the following formula (3)

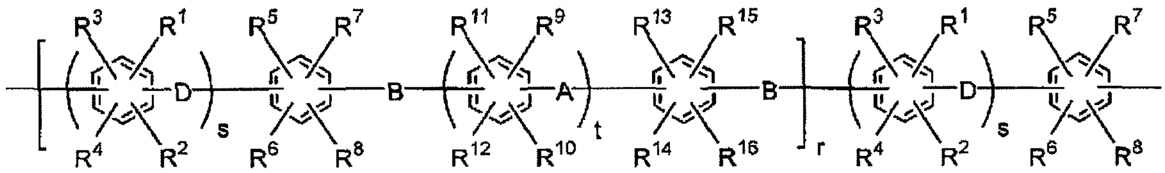

• • • (3)

wherein

A and D each independently represent a direct bond, -O-,-S-, -CO-, $-SO_2-$ -SO-, -CONH-, -COO-, $-(CF_2)_i-$ (wherein i is an integer of 1 to 10), $-(CH_2)_j-$ (wherein "j" is an integer of 1 to 10), -CR'2- (wherein R' represents an aliphatic hydrocarbon group, an aromatic hydrocarbon group or a halogenated hydrocarbon group), a cyclohexylidene group or a fluorenylidene group;

B independently represents -O- or -S-;

$R^1$ to $R^{16}$ each independently represent a hydrogen atom, a halogen atom, a hydroxy group, a nitro group, a nitrile group or $R^{22}$-E- (wherein E represents a direct bond, -O-, - S-, -CO-, $-SO_2-$, -CONH-, -COO-, $-CF_2-$, $-CH_2-$, $-C(CF_3)_2-$ or - $C(CH_3)_2-$; $R^{22}$ represents an alkyl group, a halogenated alkyl group, an alkenyl group, an aryl group, a halogenated aryl group or a nitrogen-containing heterocycle and at least one hydrogen atom in these groups may be replaced by at least one kind of group selected from the group consisting of a hydroxy group, a nitro group, a nitrile group and $R^{22}$-E-); two or more of $R^1$ to $R^{16}$ may be bound to form a cyclic structure; and

"s" and "t" each independently represent an integer of 0 to 4; and "r" represents 0 or an integer of 1 or more;

with the proviso that in the formula (3), at least one of A, B and D is -O-, and "s" is an integer of 1 to 4 when "r" is 0.

**9.** The electrolyte membrane according to any one of claims 1 to 8, wherein the hydrophobic structural unit comprised by the polymer (1) is a structure comprising an aromatic ring and having two bonding hands, and is a structural unit wherein:

one aromatic ring is bound to both of the two bonding hands; or
one aromatic ring (a) and an aromatic ring (b) connected to the aromatic ring (a) via a single bond or at least one aromatic ring are comprised and one bonding hand is bound to each of the aromatic ring (a) and the aromatic ring (b).

**10.** A membrane-electrode assembly, wherein a gas diffusion layer, a catalyst layer, the electrolyte membrane according to any one of claims 1 to 9, a catalyst layer and a gas diffusion layer are laminated in this order.

**11.** A polymer electrolyte fuel cell comprising the membrane-electrode assembly according to claim 10.

[Fig. 1]

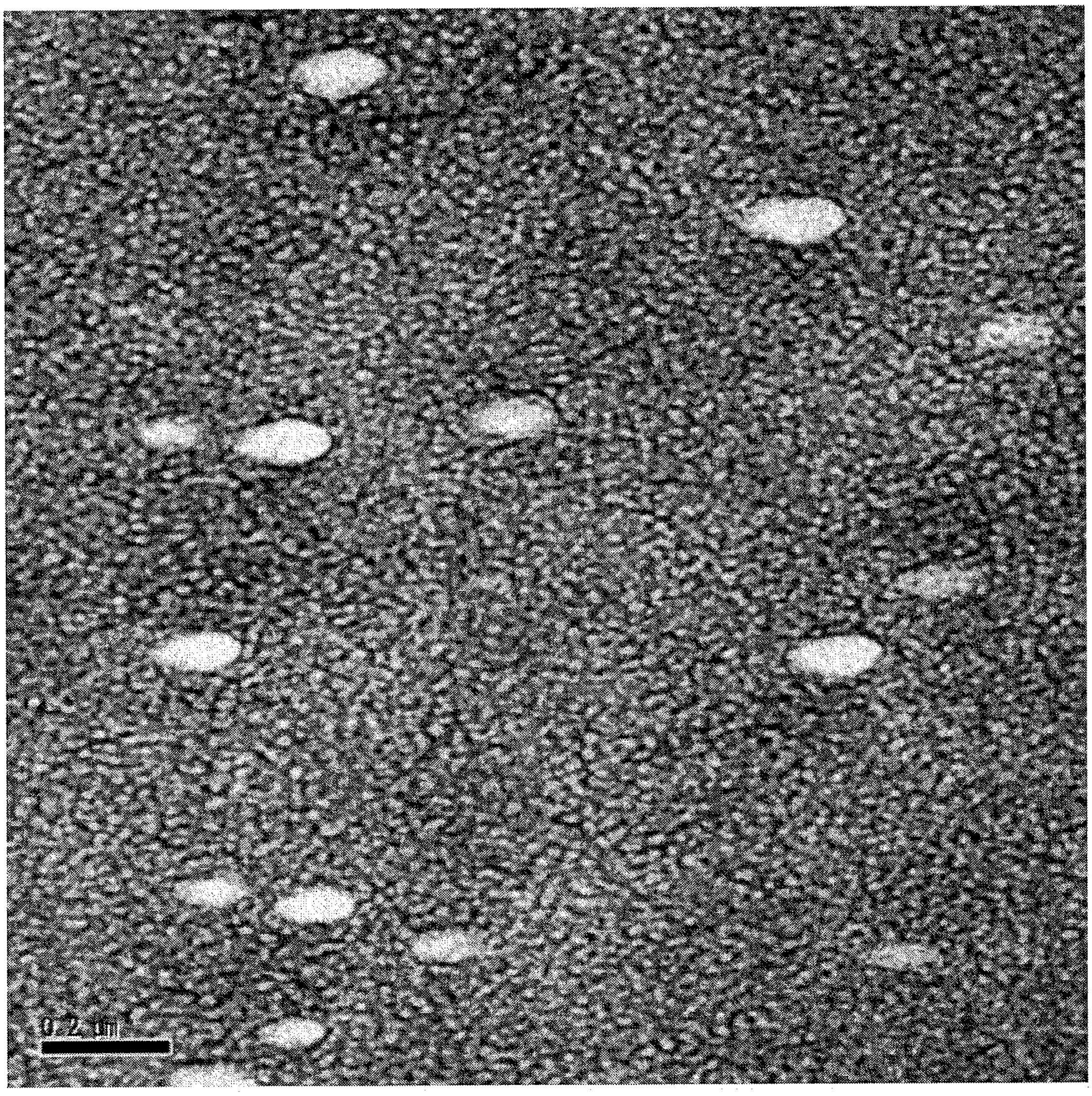

## INTERNATIONAL SEARCH REPORT

International application No.
PCT/JP2014/068267

**A. CLASSIFICATION OF SUBJECT MATTER**

*H01M8/02*(2006.01)i, *C08G61/12*(2006.01)i, *C08J5/22*(2006.01)i, *H01B1/06* (2006.01)i

According to International Patent Classification (IPC) or to both national classification and IPC

**B. FIELDS SEARCHED**

Minimum documentation searched (classification system followed by classification symbols)
H01M8/02, C08G61/12, C08J5/22, H01B1/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 8-20716 A (Hoechst AG.),<br>23 January 1996 (23.01.1996),<br>claims 1 to 3, 7; paragraphs [0010], [0012], [0013], [0021]<br>& US 5834566 A<br>claims 1 to 3, 7; column 3, lines 8 to 54; column 4, line 4 to column 5, line 13; column 7, line 63 to column 8, line 64 | 1-7,9-11<br>8 |
| Y | WO 2013/018677 A1 (JSR Corp.),<br>07 February 2013 (07.02.2013),<br>claims 1 to 3<br>(Family: none) | 8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 October, 2014 (03.10.14) | 14 October, 2014 (14.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/068267

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-31232 A (Ube Industries, Ltd.), 31 January 2003 (31.01.2003), paragraphs [0089], [0098], [0101] & EP 1394879 A1 paragraphs [0091], [0104], [0105], [0113] | 1-11 |
| A | JP 2007-56147 A (Ube Industries, Ltd.), 08 March 2007 (08.03.2007), paragraph [0005] & EP 1855339 A1 paragraph [0014] | 1-11 |
| A | WO 2007/116482 A1 (Fujitsu Ltd.), 18 October 2007 (18.10.2007), claims 1 to 3 (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007056147 A
- JP 2011089036 A
- WO 2007010731 A